# EUROPÄISCHE PATENTSCHRIFT

(11) **EP 4 031 324 B1**
(45) Veröffentlichungstag und Bekanntmachung des Hinweises auf die Patenterteilung: **17.06.2026**
(21) Anmeldenummer: 20792287.3
(22) Anmeldetag: 07.09.2020
(51) Int. Cl.: B24B 13/005, F04B 49/20, F04D 15/00, G05D 16/20

(54) **VORRICHTUNG ZUM ABBLOCKEN VON OPTISCHEN WERKSTUCKEN, INSBESONDERE BRILLENGLASERN, VON ZUGEORDNETEN BLOCKSTUCKEN MIT EINER HYDRAULIKANORDNUNG**
APPARATUS FOR DEBLOCKING OPTICAL WORKPIECES, PARTICULARLY SPECTACLE LENSES, FROM ASSOCIATED BLOCK PIECES WITH A HYDRAULIC ARRANGEMENT
DISPOSITIF FOUR DEBLOQUER DES PIECES OPTIQUES, EN PARTICULIER DES VERRES DE LUNETTES, A PARTIR DE PIECES DE BLOCAGE ASSOCIEES AVEC UN ARRANGEMENT HYDRAULIQUE

(30) Priorität: 16.09.2019 DE 102019006505
(43) Veröffentlichungstag der Anmeldung: 27.07.2022
(73) Patentinhaber: Satisloh AG, 6340 Baar (CH)
(72) Erfinder: SCHÄFER, Holger, 35789 Weilmünster (DE); WALLENDORF, Steffen, 35582 Wetzlar-Dutenhofen (DE); LAUTZ, Martin, 35580 Wetzlar-Nauborn (DE); PAVEL, Gregor, 35625 Hüttenberg (DE)
(74) Vertreter: Oppermann, Mark
(86) Internationale Anmeldenummer: PCT/EP2020/000149
(87) Internationale Veröffentlichungsnummer: WO 2021/052613

(56) Entgegenhaltungen:
- EP-A1- 2 637 750
- EP-A1- 3 054 156
- EP-A1- 3 517 284
- DE-A1- 102010 010 334
- DE-A1- 102017 001 679
- DE-T1- 10 196 072
- KR-B1- 101 672 543
- US-A1- 2015 233 184

## Beschreibung

### TECHNISCHES GEBIET

Die vorliegende Erfindung bezieht sich allgemein auf eine Vorrichtung zum Abblocken von optischen Werkstücken von zugeordneten Blockstücken gemäß dem Oberbegriff des Patentanspruchs 1. Insbesondere bezieht sich die Erfindung auf eine Vorrichtung zum Abblocken von Brillengläsern, wie sie in modernen "RX-Werkstätten", d.h. industriellen Produktionsstätten zur Fertigung von individuellen Brillengläsern nach Rezept in großem Umfang zum Einsatz kommen.

### STAND DER TECHNIK

Als "Aufblocken" oder kurz "Blocken" wird in der Optikfertigung allgemein der Vorgang bezeichnet, bei dem ein optisches Werkstück mittels eines geeigneten Materials (niedrig schmelzende Legierung - sogenanntes "Alloy" - oder Klebstoff) auf einem sogenannten "Blockstück" temporär befestigt wird, oder aber das Blockmaterial auf dem Werkstück aufgebracht wird, um selbst das Blockstück auszubilden, welches dann dazu dient, das Werkstück in der jeweiligen Bearbeitungsmaschine und/oder Beschichtungsanlage zu halten. Dementsprechend heißt in der Optikfertigung derjenige Vorgang "Abblocken", bei dem das optische Werkstück nach dessen (End)Bearbeitung (an Fläche und/oder Rand) und/oder Beschichtung wieder vom Blockstück/ Blockmaterial getrennt wird.

In den vorerwähnten RX-Werkstätten werden Brillengläser massenweise geblockt, bevor das jeweilige geblockte Brillenglas an seiner Rück- oder Frontfläche im Hinblick auf seine optische Wirkung und/oder am Rand zur Einpassung in ein zugeordnetes Brillengestell mit geometrisch bestimmter Schneide (Fräsen/Drehen) oder geometrisch unbestimmter Schneide (Schleifen/Polieren) spanend bearbeitet und/oder auf seiner Rück- oder Frontfläche zur Erzielung zusätzlicher Wirkungen (Erhöhung der Kratzfestigkeit, Antireflexionseigenschaften, Verspiegelung, hydrophobe Eigenschaften, etc.) beschichtet wird.

Wenn nachfolgend im Zusammenhang mit der vorliegenden Erfindung als bevorzugtem Anwendungsgebiet allgemein von "Brillengläsern" die Rede ist, sind darunter optische Linsen oder Linsenrohlinge (Blanks) für Brillen aus den gebräuchlichen Materialien, wie Polycarbonat, Mineralglas, CR 39, HI-Index, etc. und mit beliebiger (Vor)Form des Umfangsrands der Linse bzw. des Linsenrohlings zu verstehen, die vor dem Blocken bereits an einer oder beiden optisch wirksamen Fläche(n) und/oder am Rand (vor)bearbeitet und/oder (vor)beschichtet sein können aber nicht müssen. Auch kann das Brillenglas auf seiner Fläche, an der es geblockt wird/ist, mit einer Folie, einem Lack od.dgl. versehen sein, um diese Fläche vor Verunreinigung und Beschädigung zu schützen und/oder die Haftungseigenschaften zwischen Brillenglas und Blockmaterial zu verbessern, ohne dass dies im Folgenden jeweils eigens erwähnt wird.

Im Stand der Technik fehlt es nicht an Vorschlägen, wie eine Vorrichtung zum Abblocken von Brillengläsern ausgebildet werden kann, wobei zumeist ein Druckmittel wie Wasser verwendet wird, um das Brillenglas vom Blockstück durch Aufbringung hydraulischer Kräfte zu lösen. Hierbei hat sich ein technologischer Ansatz etabliert, bei dem die Aufbringung hydraulischer Kräfte von "außen" erfolgt, und zwar mittels eines von einer Düse abgegebenen Hochdruck-Wasserstrahls, der auf einer Randstelle zwischen Blockstück und Brillenglas auftrifft (beispielsweise WO 2008/003805 A1, Fig. 1, Wasserstrahl 7; DE 10 2009 048 590 A1, Fig. 5, Hochdruck-Wasserstrahl HDS; DE 10 2010 010 334 A1, Fig. 6, Hochdruck-Wasserstrahl H).

So ist aus der Druckschrift DE 10 2009 048 590 A1 eine Vorrichtung zum Abblocken von Brillengläsern bekannt, umfassend eine erste Bewegungseinrichtung zum Drehen des auf einem Blockstück geblockten Brillenglases um eine Werkstück-Drehachse, eine Düsenbaugruppe mit einer Düse für die Abgabe eines Hochdruck-Wasserstrahls in einer Richtung im Wesentlichen quer zur Werkstück-Drehachse auf einen Randbereich zwischen Brillenglas und Blockstück sowie eine zweite Bewegungseinrichtung zum Erzeugen einer Relativbewegung zwischen dem Brillenglas und der Düse entlang der Werkstück-Drehachse. Dabei kann das Brillenglas bezüglich der Düse - oder umgekehrt die Düse bezüglich des Brillenglases - mittels der zweiten Bewegungseinrichtung lagegeregelt entlang der Werkstück-Drehachse verschoben werden, so dass der Hochdruck-Wasserstrahl auf eine vorbestimmte Auftreffstelle im Randbereich zwischen Brillenglas und Blockstück gerichtet ist. Darüber hinaus kann zum Reinigen des abgeblockten Brillenglases eine weitere Düse für die Abgabe eines weiteren, rotierenden Hochdruckstrahls in der Abblockvorrichtung vorgesehen sein, die insbesondere dazu dient, das am abgeblockten Brillenglas ggf. noch anhaftende Blockmaterial vom Brillenglas "abzuschälen".

Zur Druckerzeugung und zum Fördern des Druckmittels zu den Düsen wird bei diesem Stand der Technik eine Pumpe verwendet. Genauer gesagt ist eine Hochdruckpumpe vorgesehen, die von einem Elektromotor angetrieben wird, um das Druckmittel, nämlich untemperiertes Leitungswasser, aus einem Reservoir anzusaugen und mit einem hohen Wasserdruck von z.B. 120 bar zur Düse zu fördern. Eine Auffangwanne für das von der Düse abgegebene Wasser und ein wieder zum Reservoir führender Rücklauf für dieses Wasser sind auch vorhanden.

Bei der in der Druckschrift DE 10 2010 010 334 A1 offenbarten Abblockvorrichtung ist ebenfalls eine elektrisch angetriebene Hochdruckpumpe vorgesehen. Die Hochdruckpumpe umfasst einen Druckanschluss, der über einen elastischen Hochdruckschlauch hydraulisch mit einer Düse für die Abgabe eines Druckmittel-Hochdruckstrahls verbunden ist, und einen Sauganschluss, welcher über ein weiteres Schlauchstück mit einem Wannenabschnitt fluidverbunden ist, so dass die Hochdruckpumpe Wasser als Druckmittel aus dem Wannenabschnitt ansaugen kann, in den das zum Abblocken verwendete Wasser auch wieder zurückgelangt. Auf diese Weise kann stets mit dem gleichen Wasser in einem geschlossenen Kreislauf gearbeitet werden. Hierbei verhindert ein Filter im Schlauchstück, dass etwaige Schmutzpartikel angesaugt werden und Beschädigungen am Brillenglas und/oder der Abblockvorrichtung verursachen können. Vermittels eines Druckreglers (Ventil) kann der Druck des über den Druckanschluss abgegebenen Wassers eingestellt werden.

Zur Aktivierung der Hochdruckpumpe ist bei diesem Stand der Technik eine Schalteranordnung vorgesehen, die durch geringfügiges manuelles Absenken einer Schutzhaube der Abblockvorrichtung aus deren Schließposition gegen die Federkraft von Druckfedern betätigt werden kann. Entlastet der Bediener die Schutzhaube, so drücken die Druckfedern die Schutzhaube wieder nach oben und die Schalteranordnung wird geöffnet. Auf diese Weise wird sichergestellt, dass die Hochdruckpumpe nur bei geschlossener Schutzhaube aktiviert werden kann und es hierfür zudem eines Bedienereingriffs (weiteres Herunterdrücken der Schutzhaube gegen Federkraft) bedarf; sobald die Schutzhaube vom Bediener entlastet wird, geht die Hochdruckpumpe aus. Diese Art der Aktivierung der Hochdruckpumpe bedingt indes einen intermittierenden Pumpenbetrieb, der in einem Dauereinsatz mit industriellem Maßstab die Gefahr von Pumpenschäden aufgrund von Kavitationsfraßerscheinungen bergen würde.

Die den Oberbegriff des Patentanspruchs 1 bildende Druckschrift DE 10 2017 001 679 A1 offenbart weiterhin eine Vorrichtung zum Abblocken einer Linse von einem Blockstück, an dem die Linse mittels eines Blockmaterials geblockt ist, wobei eine Blockseite der Linse ggf. mit einer Schutzschicht oder -folie versehen ist. Diese vorbekannte Vorrichtung umfasst einen Arbeitsraum, eine erste Halteeinrichtung zur drehenden Halterung der Linse im Arbeitsraum, eine zweite Halteeinrichtung zur drehenden Halterung des Blockstücks im Arbeitsraum, und mehrere Düseneinrichtungen zur Abgabe von Fluidstrahlen im Arbeitsraum. Namentlich sind drei Düseneinrichtungen zur Erzeugung eines ersten, eines zweiten und eines zusätzlichen Fluidstrahls im Arbeitsraum vorgesehen, wobei der erste Fluidstrahl zum Lösen der Linse mit der Schutzschicht, sofern vorhanden, vom Blockmaterial, der zweite Fluidstrahl zum Entfernen von Blockmaterial von dem Blockstück und der zusätzliche Fluidstrahl zum Entfernen der Schutzschicht und/oder von Blockmaterial von der Linse eingesetzt werden kann.

Üblicherweise wird zum Lösen der Linse vom Blockstück und zum Reinigen von Linse und Blockstück (Entfernen der Schutzschicht bzw. des Blockmaterials) den jeweiligen Erfordernissen entsprechend mit Fluidstrahlen unterschiedlichen Drucks gearbeitet, wobei in einem industriellen Fertigungsumfeld Berücksichtigung zu finden hat, dass zum einen der jeweilige Teilprozess möglichst schnell ablaufen soll und zum anderen die noch abzublockende oder schon abgeblockte Linse beim Lösen bzw. Reinigen keine Beschädigung erfährt.

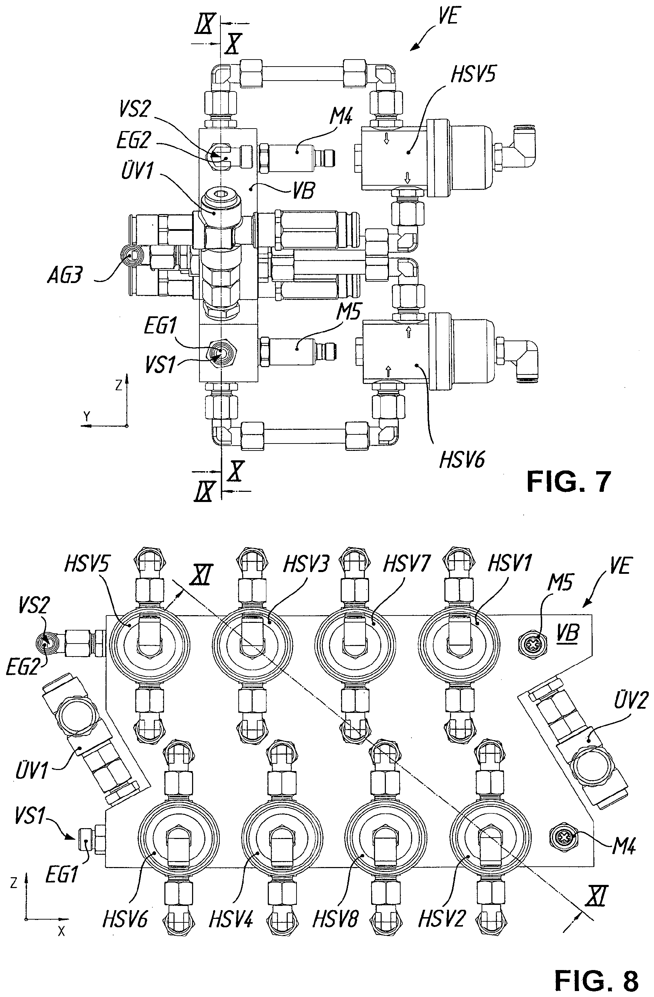

Auch aus der Druckschrift DE 10 2017 001 679 A1 (Fig. 7) ist in diesem Zusammenhang ferner bekannt, eine Pumpe einzusetzen, mit der das verwendete Wasser aus einem Tank angesaugt und den Düseneinrichtungen über eine Leitung zugeleitet bzw. zugeführt wird. Die Versorgung erfolgt hierbei mit dem gewünschten Druck bzw. der Druck wird über entsprechende Steuer- und Regelventile eingestellt. Diesbezügliche weitere Details sind diesem Stand der Technik indes nicht zu entnehmen.

Des Weiteren beschreibt die Druckschrift EP 3 517 284 A1 ein System und ein Verfahren zum automatisierten Herstellen von Brillenlinsen, die dabei temporär mittels einer Klebstoff-Zusammensetzung und einer Legierungs-Zusammensetzung an Blockstücken gehalten werden. Bei diesem Stand der Technik wird zum Abblocken ein flüssiges Abblockmittel, wie z.B. Wasser verwendet, welches über eine Düsenanordnung zunächst unter einer Temperatur von 60 bis 90°C und einem Druck zwischen ca. 70 und 90 bar zugeführt wird, um die Legierungs-Zusammensetzung zu schmelzen, bevor eine weitere sprühende Beaufschlagung mit dem Wasser bei einer zweiten Temperatur und einem zweiten Druck erfolgt, um auch die Klebstoff-Zusammensetzung von der jeweiligen Brillenlinse zu entfernen. Details zur Druckerzeugung für das flüssige Abblockmittel sind diesem Stand der Technik indes nicht zu entnehmen.

Schließlich offenbaren die Druckschriften EP 3 054 156 A1, EP 2 637 750 A0 (WO 2012/062956 A1), US 2015/0233184 A1, KR 10-1672543 B1 und DE 101 96 072 T1 verschiedene Hydraulikanordnungen, bei denen sich der Druck des geförderten bzw. abgegebenen Fluids über die Drehzahl der jeweiligen Pumpe einstellen lässt. Diese Druckschriften haben allerdings keinerlei Bezug zur Optikfertigung, insbesondere nicht zum fluidunterstützten Abblocken von optischen Werkstücken von zugeordneten Blockstücken.

### AUFGABENSTELLUNG

Der Erfindung liegt die Aufgabe zugrunde, eine Vorrichtung zum Abblocken von optischen Werkstücken, insbesondere Brillengläsern, von zugeordneten Blockstücken mit einer möglichst einfach und kompakt ausgebildeten, in einem industriellen Fertigungsumfeld einsetzbaren Hydraulikanordnung zu schaffen, die in zuverlässiger Weise eine prozessgerechte Druckerzeugung ermöglicht.

### DARSTELLUNG DER ERFINDUNG

Diese Aufgabe wird durch eine eine Hydraulikanordnung aufweisende Vorrichtung zum Abblocken von optischen Werkstücken, insbesondere Brillengläsern, von zugeordneten Blockstücken mit den Merkmalen des Patentanspruchs 1 gelöst. Vorteilhafte Ausgestaltungen der Erfindung sind Gegenstand der Unteransprüche.

Bei einer Vorrichtung zum Abblocken von optischen Werkstücken, insbesondere Brillengläsern, von zugeordneten Blockstücken mit einer Hydraulikanordnung, umfassend eine Düsenanordnung für die Abgabe von Druckmittel-Hochdruckstrahlen zum Abblocken des Werkstücks vom zugeordneten Blockstück mit einem ersten Druck und zum Reinigen des abgeblockten Werkstücks und/oder des Blockstücks mit wenigstens einem zweiten, vom ersten Druck verschiedenen Druck sowie eine Pumpeneinrichtung, die einen Niederdruckabschnitt von einem Hochdruckabschnitt der Hydraulikanordnung trennt und dazu dient, das über den Niederdruckabschnitt zugeführte Druckmittel definiert mit Druck zu beaufschlagen und druckbeaufschlagt zu der Düsenanordnung im Hochdruckabschnitt zu fördern, ist erfindungsgemäß vorgesehen, dass die Pumpeneinrichtung eine erste Hochdruckpumpe und eine zweite Hochdruckpumpe umfasst, die durch jeweils einen zugeordneten Drehantrieb antreibbar sind, dessen Drehzahl zur Einstellung des ersten Drucks oder des zweiten Drucks veränderbar ist, wobei mittels der ersten Hochdruckpumpe wenigstens der erste Druck und mittels der zweiten Hochdruckpumpe wenigstens der zweite Druck erzeugbar ist.

Nach der vorliegenden Erfindung kann also zunächst die Drehzahl des jeweils zugeordneten Drehantriebs für die jeweilige Hochdruckpumpe eingestellt und variiert werden, um in prozessgerechter Weise, d.h. dem jeweiligen Bedarf entsprechend das Druckmittel z.B. bei einer ersten (höheren) Antriebsdrehzahl mit dem ersten (größeren) Druck (beispielsweise 160 bar) für Abblockzwecke oder bei einer zweiten (niedrigeren) Antriebsdrehzahl mit dem zweiten (kleineren) Druck (z.B. ein Druck zwischen 80 und 160 bar) für Reinigungszwecke zu der Düsenanordnung zu fördern. Im Vergleich zu den vorbekannten Abblockvorrichtungen mit einer Hydraulikanordnung, bei denen das Druckmittel durch die Pumpeneinrichtung stets mit einem maximalen Druck gefördert wird und der Druck sodann über eine Ventilanordnung für den jeweiligen Teilprozess (Abblocken bzw. Reinigen) eingestellt bzw. reduziert wird bevor das Druckmittel letztlich zu der Düsenanordnung gelangt, bietet das erfindungsgemäße Hydraulikkonzept mehrere Vorteile. Zum einen kann der Druck durch die mögliche Drehzahlvorgabe für den Drehantrieb der jeweiligen Hochdruckpumpe in sehr energieeffizienter Weise schon in prozessgerechter Höhe erzeugt werden, anders als im Stand der Technik, wo zunächst ein - etwa für Reinigungszwecke zu hoher - maximaler Druck erzeugt wird, der dann mittels der Ventilanordnung passend zu dem jeweiligen Teilprozess zu reduzieren, d.h. teilweise wieder zu "vernichten" ist. Zum anderen kann die einzelne Hochdruckpumpe bzw. deren Antrieb kleiner dimensioniert werden, weil keine Auslegung auf die permanente Erzeugung eines maximalen Drucks erfolgen muss. Dies führt in der Praxis auch zu einer deutlichen Verkleinerung der Baugröße der Pumpeneinrichtung.

Dadurch, dass nach der vorliegenden Erfindung die Pumpeneinrichtung ferner zwei Hochdruckpumpen zur Erzeugung der verschiedenen Drücke umfasst, kann in sehr energieeffizienter und bedarfsgerechter Weise die eine Hochdruckpumpe den ersten (größeren) Druck zum Abblocken und die andere Hochdruckpumpe den zweiten (kleineren) Druck zum Reinigen liefern, und zwar auch zur selben Zeit, falls die genannten Teilprozesse für verschiedene optische Werkstücke simultan ablaufen sollen, was bevorzugt ist.

Im Hinblick auf eine prozessgerechte Druckerzeugung ist die Kombination der vorbeschriebenen Maßnahmen, d.h. das Vorsehen von zwei Hochdruckpumpen mit Drehantrieben, deren Drehzahl zur Druckeinstellung jeweils veränderbar ist, besonders vorteilhaft. So kann etwa bei entsprechender hydraulischer Verschaltung wahlweise die eine oder die andere Hochdruckpumpe für den jeweiligen Teilprozess (Abblocken bzw. Reinigen) verwendet und so die jeweilige Pumpenauslastung gesteuert werden.

In einer bevorzugten Ausgestaltung der Abblockvorrichtung ist vorgesehen, dass den Hochdruckpumpen der Pumpeneinrichtung jeweils ein Servomotor als Drehantrieb zugeordnet ist, der mit der jeweiligen Hochdruckpumpe über ein Winkelgetriebe antriebsverbunden ist. In konkreter Auslegung kann die einzelne Hochdruckpumpe z.B. bei einer Eingangsdrehzahl von 1000 U/min Druckmittel unter einem Druck von 200 bar fördern, was bei einem Servomotor mit einer üblichen Nenndrehzahl von 3000 U/min als Drehantrieb der Hochdruckpumpe ein Übersetzungsverhältnis von 3 zu 1 am Winkelgetriebe erfordert. Andere Getriebeformen sind hier zwar ebenfalls denkbar, z.B. Stirnrad- oder Kettengetriebe, im Hinblick auf einen möglichst kleinen Bauraumbedarf bei hohem Wirkungsgrad bevorzugt sind indes Winkelgetriebe. Was ferner den bevorzugten Einsatz von Servomotoren angeht, zeichnen sich diese - neben der guten und genauen Drehzahlregelbarkeit, und somit auch der Druckregelbarkeit der angetriebenen Hochdruckpumpen - insbesondere dadurch aus, dass Beschleunigungs- und Bremsrampen definiert werden können. Kavitationseffekten in den Verdichterstufen kann so vorteilhaft entgegengewirkt werden.

In der Pumpeneinrichtung der Hydraulikanordnung der Abblockvorrichtung sind die Hochdruckpumpen ferner vorzugsweise identisch ausgebildet, was insbesondere hinsichtlich der Kosten und der Ersatzteilthematik von Vorteil ist.

In der Pumpeneinrichtung der Hydraulikanordnung der Abblockvorrichtung zum Einsatz kommen können des Weiteren grundsätzlich Hochdruckpumpen beliebiger Bauart, solange sie geeignet sind, dauerhaft den erforderlichen Druck zu liefern, so etwa Zahnradpumpen, Axial-, Radial- oder Hubkolbenpumpen. Im vorliegenden Fall bevorzugt ist der Einsatz von Plungerpumpen, insbesondere im Hinblick auf eine möglichst hohe Dauerfestigkeit.

Prinzipiell ist es denkbar, die Düsenanordnung im Hochdruckabschnitt der Hydraulikanordnung der Abblockvorrichtung mit nur einer, ggf. geeignet verstell- bzw. positionierbaren Hochdruckdüse für beides, d.h. das Abblocken und das Reinigen der optischen Werkstücke bzw. Blockstücke auszustatten. Bevorzugt ist es allerdings, wenn die Düsenanordnung im Hochdruckabschnitt der Hydraulikanordnung der Abblockvorrichtung eine erste Düsenbaugruppe mit einer ersten Hochdruckdüse für die Abgabe des Druckmittel-Hochdruckstrahls zum Abblocken des Werkstücks vom zugeordneten Blockstück und eine zweite Düsenbaugruppe mit einer zweiten Hochdruckdüse für die Abgabe des Druckmittel-Hochdruckstrahls zum Reinigen des abgeblockten Werkstücks und/oder des Blockstücks umfasst. So können vorteilhaft verschiedene, jeweils besonders geeignete Düsenarten für die unterschiedlichen Teilprozesse zum Einsatz kommen, etwa eine Flachstrahldüse zur Abgabe eines aufgefächerten Hochdruckstrahls für das Abblocken und eine Reinigungsdüse zur Abgabe eines rotierenden Hochdruckstrahls für die Reinigung. Auch können verschiedene Werkstücke ggf. simultan abgeblockt bzw. gereinigt werden.

Besonders bevorzugt ist eine Ausgestaltung der Abblockvorrichtung mit einer Hydraulikanordnung, bei der die Düsenanordnung im Hochdruckabschnitt der Hydraulikanordnung auch eine dritte Düsenbaugruppe mit einer dritten Hochdruckdüse für die Abgabe eines Druckmittel-Hochdruckstrahls zum Reinigen des Blockstücks und/oder des Werkstücks aufweist. So können die einzelnen Hochdruckdüsen in für den jeweiligen Teilprozess optimierter Anordnung und Ausrichtung platziert bzw. positioniert werden. Zudem können Werkstück und Blockstück mit den zwei zugeordneten Hochdruckdüsen zeitgleich gereinigt werden, während ein anderes Werkstück ggf. simultan abgeblockt wird.

Im weiteren Verfolg des Erfindungsgedankens können die erste Hochdruckpumpe und die zweite Hochdruckpumpe parallel angeordnet sein, wobei jede der Hochdruckpumpen über eine gemeinsame Verteilereinrichtung im Hochdruckabschnitt der Hydraulikanordnung der Abblockvorrichtung wahlweise mit jeder der Hochdruckdüsen verbindbar ist. Hierdurch ist vorteilhaft eine Redundanz gegeben, bei der jede Hochdruckpumpe jeden Teilprozess bedienen kann. Zudem können die Hochdruckpumpen auslastungsoptimiert betrieben werden, so dass z.B. nicht immer ein und dieselbe Hochdruckpumpe den zum Abblocken erforderlichen, verglichen zum Reinigungsdruck in der Regel größeren Druck erzeugen muss. Dies ist letztlich auch einem zuverlässigen, dauerhaften Betrieb der Abblockvorrichtung förderlich. Darüber hinaus kann der Gesamtablauf mit Abblock- und Reinigungsschritten zeitlich optimiert erfolgen.

In zweckmäßiger und kostengünstiger Ausgestaltung kann hierbei die Anordnung so getroffen sein, dass die Verteilereinrichtung zwei Versorgungsstränge aufweist, die jeweils mit einer der Hochdruckpumpen fluidverbunden sind, wobei jedem Versorgungsstrang eine Mehrzahl von Hochdruckschaltventilen zugeordnet ist, über die wahlweise eine Fluidverbindung von den Versorgungssträngen zur jeweiligen Hochdruckdüse herstellbar ist. In Abhängigkeit von der Bauform der Hochdruckschaltventile können auch jeweils zugeordnete Rückschlagventile vorgesehen sein, um zu gewährleisten, dass das jeweilige Hochdruckschaltventil auch bei anstehendem Hydraulikdruck seine eingestellte Schaltstellung hält.

Ist bei einer solchen Ausgestaltung der Hydraulikanordnung der Abblockvorrichtung optional jedem Versorgungsstrang als Bypass ein weiteres Hochdruckschaltventil zugeordnet, über das der jeweilige Versorgungsstrang wahlweise mit einem Tank für das Druckmittel verbindbar ist, so können die Hochdruckpumpen kontinuierlich betrieben werden. Wenn also gerade kein Abblock- oder Reinigungsvorgang durchgeführt wird, fördern die Hochdruckpumpen das Druckmittel über den geöffneten Bypass zurück in den Tank. Dies ist insbesondere im Hinblick auf eine möglichst lange Lebensdauer der Hochdruckpumpen von Vorteil, weil dann die Hochdruckpumpen nicht intermittierend betrieben werden müssen, was in einem Dauereinsatz mit industriellem Maßstab die Gefahr von Pumpenschäden aufgrund von Kavitationsfraßerscheinungen bergen würde, die namentlich dann auftreten können, wenn diesbezüglich kritische Pumpendrehzahlbereiche beim Hochfahren bzw. Herunterfahren der Pumpenantriebe häufig durchfahren werden.

Grundsätzlich können die Hochdruckschaltventile z.B. elektromagnetisch oder hydraulisch, ggf. auch beidseitig, d.h. in beide Schaltstellungen (offen oder geschlossen) wirkend betätigbar sein. Vorzugsweise sind die Hochdruckschaltventile jedoch gegen Federvorspannung pneumatisch betätigbar, was nicht nur einer einfachen Ventilausgestaltung förderlich, sondern auch energetisch günstig und preiswert ist, zumal an einer Abblockvorrichtung Druckluft als Arbeitsmittel zumeist ohnehin vorhanden ist. Hierbei können die Hochdruckschaltventile in Schließstellung federvorgespannt sein, was gegenüber einer ebenfalls denkbaren Federvorspannung in Öffnungsstellung zur Vermeidung eines Nachlaufdrucks bevorzugt ist.

Unter Sicherheitsaspekten und im Hinblick auf eine gute Wartungsmöglichkeit der Hydraulikanordnung der Abblockvorrichtung ist es weiterhin bevorzugt, wenn jedem Versorgungsstrang ein Überdruckventil zugeordnet ist, über das der jeweilige Versorgungsstrang bei Überschreiten eines vorbestimmten Drucks (z.B. 200 bar) mit dem Tank für das Druckmittel verbindbar ist, und/ oder jeder Versorgungsstrang über einen Notablass hydraulisch entlastbar ist und/oder mit einer Druckmesseinrichtung verbunden ist. Im Falle einer Wartung kann die Hydraulikanordnung der Abblockvorrichtung durch den Notablass auf einfache Weise drucklos gemacht werden. Wird der Druck im System zu groß, öffnen die Überdruckventile und stellen somit sicher, dass die Hochdruckkomponenten (Pumpen, Ventile, Verschraubungen, Rohre, Schläuche, etc.) keinen Schaden nehmen.

Prinzipiell können die einzelnen hydraulischen Komponenten der Verteilereinrichtung durch eine freie Verrohrung - bestehend aus Rohren, Anschlüssen, T- und L-Stücken, Verteilern, etc. - miteinander verbunden sein. Bevorzugt ist allerdings eine Ausgestaltung der Hydraulikanordnung der Abblockvorrichtung, bei der die Verteilereinrichtung einen gemeinsamen Ventilblock aufweist, in dem die Versorgungsstränge als Kanäle oder Bohrungen ausgebildet sind und der die Hochdruckschaltventile trägt. In einer solchen Blockbauweise sind im Vergleich zu einer freien Verrohrung infolge einer geringeren Anzahl an Bauteilen deutlich weniger Montage- und Dichtstellen vorhanden, außerdem kann so eine deutlich kompaktere Einheit kostengünstiger realisiert werden. Ferner kann der gemeinsame Ventilblock mit Befestigungsgewinden versehen sein und somit vorteilhaft direkt montiert werden.

Schließlich kann im Niederdruckabschnitt wenigstens eine Niederdruckdüse für Reinigungszwecke vorgesehen sein, die über ein Niederdruckschaltventil, welches an eine Zuführleitung für das Druckmittel angeschlossen ist, mit dem Druckmittel versorgbar ist. Solche Niederdruckdüsen können etwa zum Abspülen von Gehäuseteilen der Abblockvorrichtung, wie Trichtern oder Auffangwannen, oder aber als Tankdüse dienen, mit der Verunreinigungen im Tank in der Schwebe gehalten werden, damit sie abgepumpt werden können. Vorteilhaft wird so ein und dasselbe Hydrauliksystem auch für untergeordnete Zwecke verwendet.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise vereinfachten bzw. schematischen und nicht maßstabsgerechten Zeichnungen näher erläutert. In den Zeichnungen zeigen:

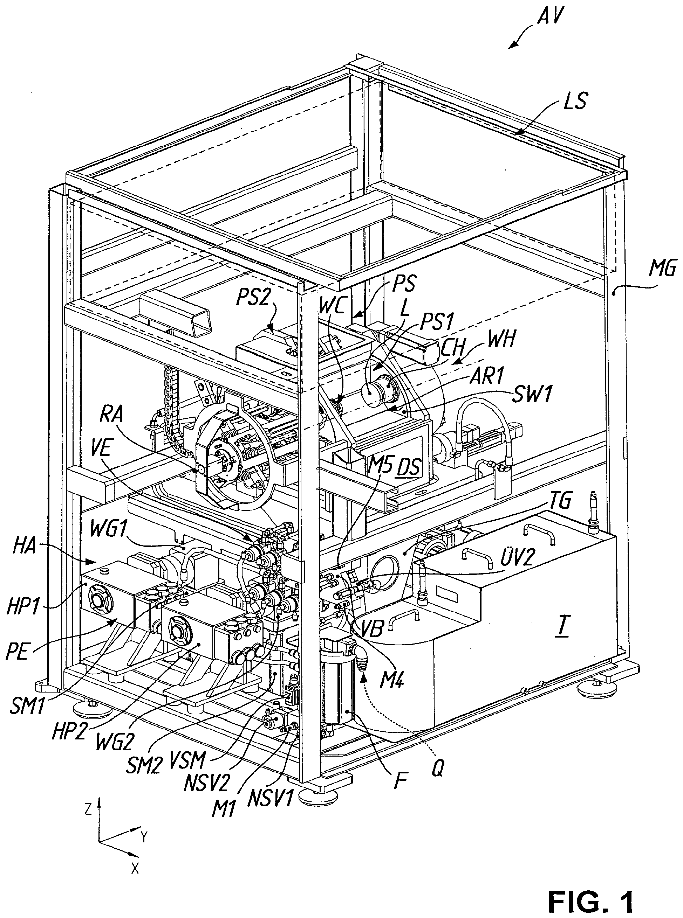

- Fig. 1: eine perspektivische Ansicht einer erfindungsgemäßen Abblockvorrichtung zum Abblocken von optischen Werkstücken, namentlich Brillengläsern, von zugeordneten Blockstücken von schräg oben / vorne links, mit einer Hydraulikanordnung in einem unteren Bereich der Abblockvorrichtung, umfassend allgemein eine Düsenanordnung zum Abblocken und Reinigen der Werkstücke bzw. Blockstücke und eine Pumpeneinrichtung für eine hydraulische Versorgung der Düsenanordnung;

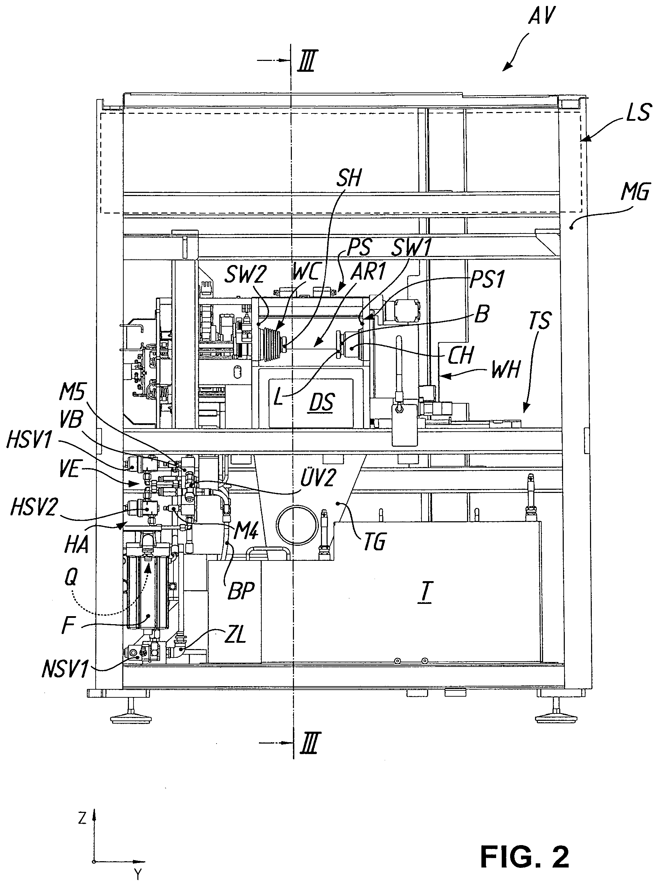

- Fig. 2: eine Vorderansicht der Abblockvorrichtung gemäß Fig. 1;

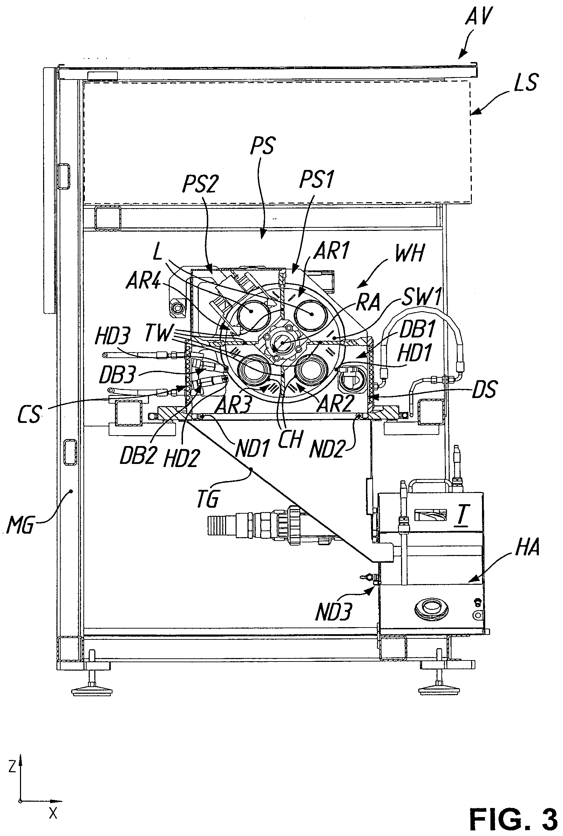

- Fig. 3: eine Schnittansicht der Abblockvorrichtung gemäß Fig. 1 entsprechend der Schnittverlaufslinie III-III in Fig. 2, der insbesondere Details der Düsenanordnung zu entnehmen sind, welche eine erste Hochdruckdüse für die Abgabe eines Druckmittel-Hochdruckstahls zum Abblocken der Werkstücke, eine zweite Hochdruckdüse für die Abgabe eines Druckmittel-Hochdruckstrahls zum Reinigen der abgeblockten Werkstücke und eine dritte

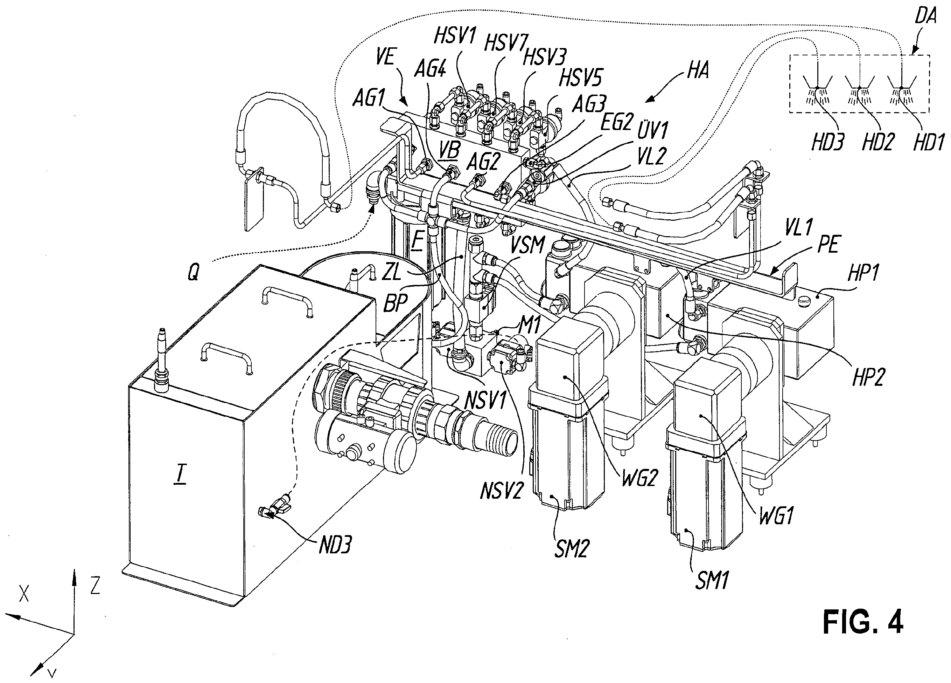

- Fig. 4: Hochdruckdüse zur Abgabe eines Druckmittel-Hochdruckstrahls zum Reinigen der Blockstücke umfasst; eine perspektivische Ansicht der von der Abblockvorrichtung gemäß Fig. 1 separierten Hydraulikanordnung von schräg oben / hinten rechts, ohne die Hochdruckdüsen, mit Blick auf eine Verteilereinrichtung der Hydraulikanordnung, die zwischen der in Fig. 4 schematisch angedeuteten Düsenanordnung und der Pumpeneinrichtung angeordnet ist;

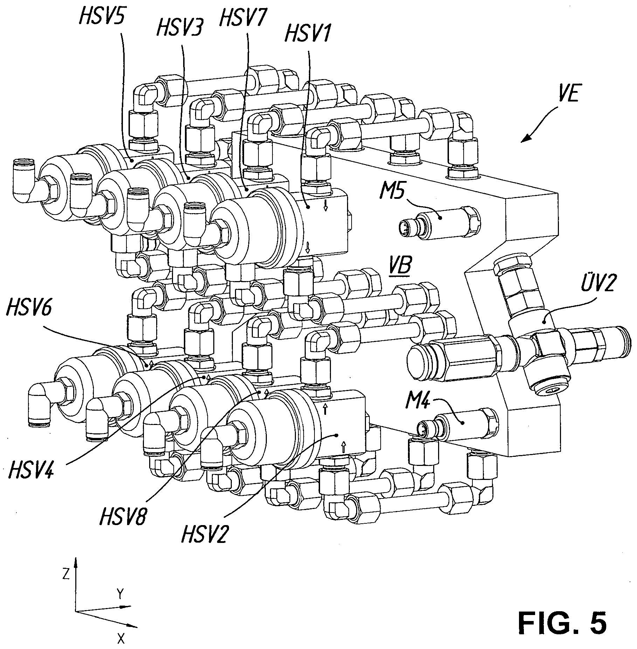

- Fig. 5: eine perspektivische Ansicht der von der Hydraulikanordnung gemäß Fig. 4 separierten Verteilereinrichtung von schräg oben / vorne links, die einen gemeinsamen Ventilblock aufweist, der u.a. Hochdruckschaltventile für die hydraulische Beaufschlagung der Düsenanordnung trägt;

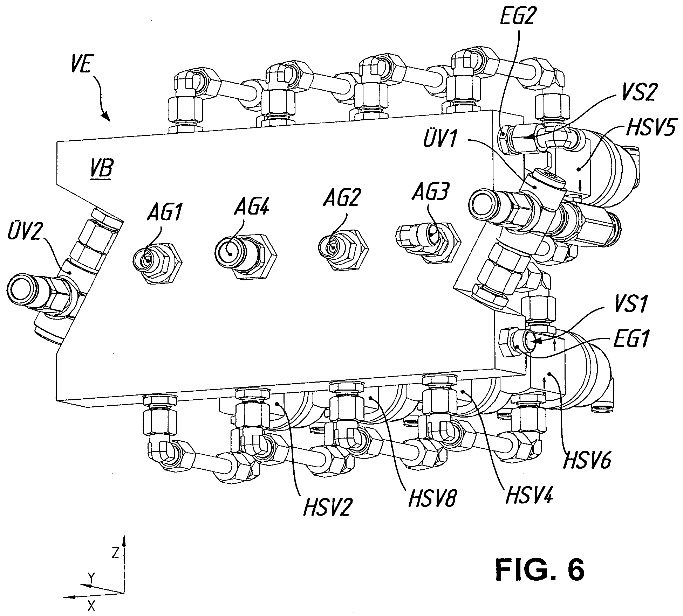

- Fig. 6: eine perspektivische Ansicht der in Fig. 5 gezeigten Verteilereinrichtung von schräg unten / hinten rechts;
- Fig. 7: eine Rückansicht der Verteilereinrichtung gemäß Fig. 5 von rechts in Fig. 6;
- Fig. 8: eine Seitenansicht der Verteilereinrichtung gemäß Fig. 5 von rechts in Fig. 7;

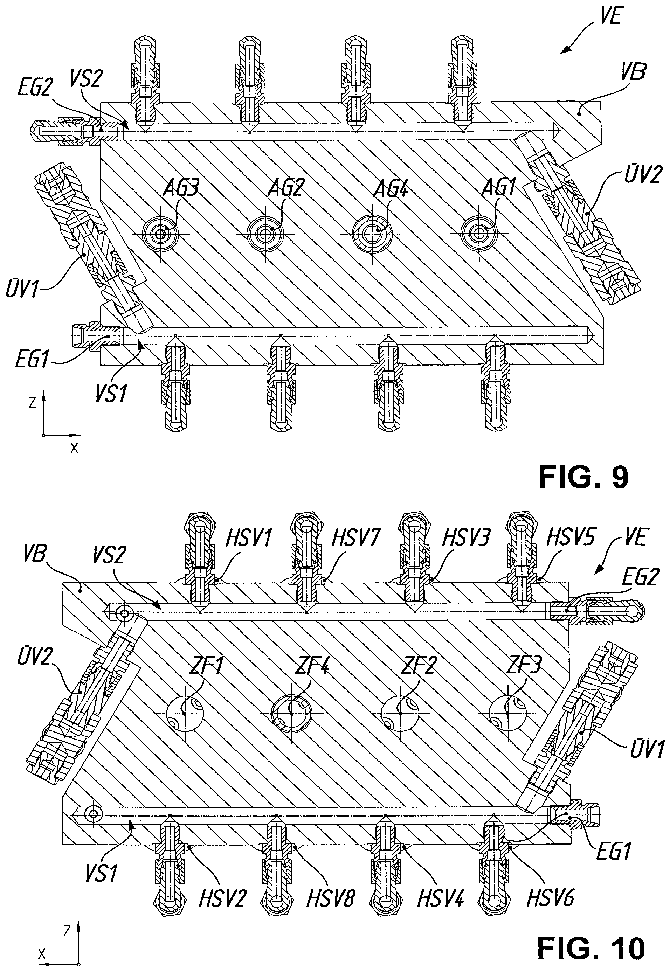

- Fig. 9: eine Schnittansicht der Verteilereinrichtung gemäß Fig. 5 entsprechend der Schnittverlaufslinie IX-IX in Fig. 7 (d.h. von rechts in Fig. 7 gesehen);
- Fig. 10: eine Schnittansicht der Verteilereinrichtung gemäß Fig. 5 entsprechend der Schnittverlaufslinie X-X in Fig. 7 (d.h. von links in Fig. 7 gesehen);

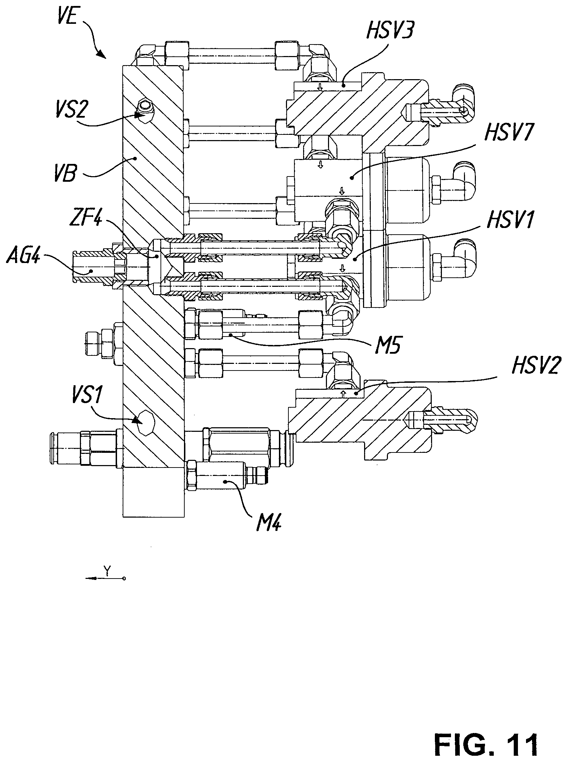

- Fig. 11: eine Schnittansicht der Verteilereinrichtung gemäß Fig. 5 entsprechend der Schnittverlaufslinie XI-XI in Fig. 8; und

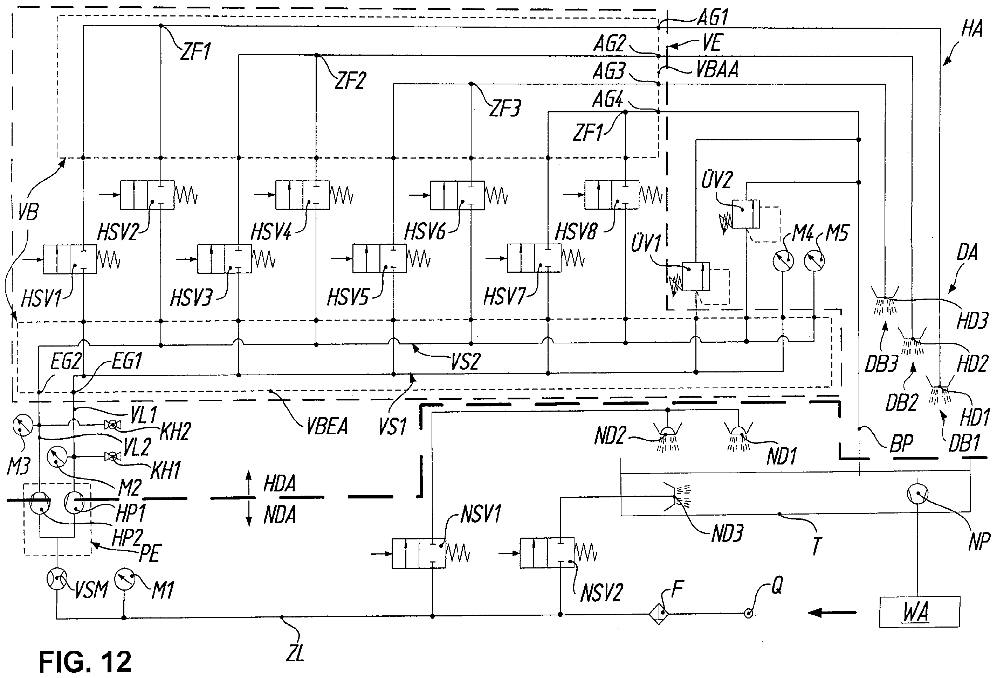

- Fig. 12: eine Schaltskizze der Hydraulikanordnung der erfindungsgemäßen Abblockvorrichtung.

Zu den Zeichnungen sei an dieser Stelle noch angemerkt, dass die Darstellung der erfindungsgemäßen Abblockvorrichtung mit der Hydraulikanordnung in einem rechtwinkligen kartesischen Koordinatensystem erfolgt, in welchem der Buchstabe x die Längenrichtung, der Buchstabe y die Breitenrichtung und der Buchstabe z die Höhenrichtung der Abblockvorrichtung bzw. der Hydraulikanordnung bezeichnet. In den Zeichnungen wurden zur Freigabe der Sicht auf wesentliche Bauteile bzw. Baugruppen der Abblockvorrichtung und der Hydraulikanordnung und zur Vereinfachung der Darstellung zumeist insbesondere auch der Schaltschrank, das Bedienfeld, Teile der Verkleidung, die Versorgungseinrichtungen (einschließlich Leitungen, Schläuche und Rohre) für Strom und Druckluft, die Absaugung sowie die Mess-, Wartungs- und Sicherheitseinrichtungen weggelassen, weil sie für das Verständnis der Erfindung nicht erforderlich erscheinen und/oder dem Fachmann ohnehin geläufig sind.

### DETAILLIERTE BESCHREIBUNG DES AUSFÜHRUNGSBEISPIELS

In den Fig. 1 bis 3 ist eine Abblockvorrichtung zum Abblocken von optischen Werkstücken, wie Brillengläsern L, von zugeordneten Blockstücken B allgemein mit dem Bezugszeichen AV beziffert. Die Abblockvorrichtung AV hat ein Maschinengestell MG, an dem als Kernstück der Abblockvorrichtung AV an zentraler Stelle eine besonders ausgebildete Werkstück-Halteanordnung WH bewegbar gelagert ist, die nachfolgend noch insoweit beschrieben wird, als es für ein besseres Verständnis der vorliegenden Erfindung wünschenswert erscheint.

Der grundlegende Aufbau der Abblockvorrichtung AV und insbesondere der Werkstück-Halteanordnung WH ist Gegenstand der parallel, d.h. mit gleichem Anmeldetag unter dem Titel "Optikmaschine für das Behandeln und/oder Bearbeiten von optischen Werkstücken, wie Brillengläsern, sowie Abblockvorrichtung und Abblockverfahren hierfür" eingereichten deutschen Patentanmeldung DE 10 2019 006 504.2, auf die an dieser Stelle hinsichtlich der genaueren Struktur und der Funktion der Abblockvorrichtung AV im Allgemeinen und der Werkstück-Halteanordnung WH im Speziellen zur Vermeidung von Wiederholungen ausdrücklich verwiesen sei.

Wie in Fig. 3 gut zu erkennen ist, sind um die Werkstück-Halteanordnung WH herum verschiedene Stationen der Abblockvorrichtung AV am Maschinengestell MG ortsfest gruppiert. Hierbei handelt es sich zunächst um eine oben liegende Ladestation PS, umfassend eine erste Teilstation PS1 (in Fig. 3 oben rechts) zum Beladen von auf Blockstücken B aufgeblockten Brillengläsern L vor dem Abblocken und zum Entladen von Blockstücken B nach dem Abblocken sowie eine zweite Teilstation PS2 (in Fig. 3 oben links) zum Entladen von abgeblockten Brillengläsern L nach dem Abblocken. Mit einem räumlichen Abstand zur Ladestation PS sind unterhalb der Ladestation PS eine Abblockstation DS (in Fig. 3 unten rechts) als erste Behandlungsstation zum Abblocken der Brillengläser L vom jeweils zugeordneten Blockstück B und eine Reinigungsstation CS (in Fig. 3 unten links) als weitere Behandlungsstation zum Reinigen der abgeblockten Brillengläser L und der Blockstücke B am Maschinengestell MG montiert.

Die Abblockstation DS weist gemäß Fig. 3 als eine erste Behandlungseinrichtung eine erste Düsenbaugruppe DB1 mit einer ersten Hochdruckdüse HD1 für die Abgabe eines Druckmittel-Hochdruckstrahls zum Abblocken der Brillengläser L vom jeweils zugeordneten Blockstück B auf. Das Abblocken erfolgt bei einem ersten hydraulischen Druck von z.B. 160 bar. Die Reinigungsstation CS hat ferner gemäß Fig. 3 als eine zweite Behandlungseinrichtung eine zweite Düsenbaugruppe DB2 mit einer zweiten Hochdruckdüse HD2 für die Abgabe eines Druckmittel-Hochdruckstrahls zum Reinigen der abgeblockten Brillengläser L. Wie der Fig. 3 ebenfalls zu entnehmen ist, besitzt die Reinigungsstation CS weiterhin als eine dritte Behandlungseinrichtung eine dritte Düsenbaugruppe DB3 mit einer dritten Hochdruckdüse HD3 für die Abgabe eines Druckmittel-Hochdruckstrahls zum Reinigen der Blockstücke B. Das Reinigen erfolgt mit einem zweiten, vom ersten Druck verschiedenen Druck, der beispielsweise zwischen 80 und 160 bar liegen kann, je nach Brillenglas L bzw. Blockstück B.

Die hydraulische Versorgung der durch die Düsenbaugruppen DB1, DB2, DB3 gebildeten Düsenanordnung DA (vgl. die Fig. 4 und 12) erfolgt über eine nachfolgend noch ausführlich beschriebene Hydraulikanordnung HA, die gemäß insbesondere den Fig. 1 und 2 in einem unteren Bereich, seitlich unterhalb der Werkstück-Halteanordnung WH am Maschinengestell MG montiert ist. Diese Hydraulikanordnung HA umfasst allgemein eine Pumpeneinrichtung PE, mittels der temperiertes Wasser als Druckmittel aus einem Tank T über eine Verteilereinrichtung VE der Hydraulikanordnung HA zu den Düsenbaugruppen DB1, DB2, DB3 gefördert werden kann. Außerdem sind an die Hydraulikanordnung HA (u.a. auch) Niederdruckdüsen ND1, ND2 angeschlossen, die gemäß Fig. 3 der Abblockstation DS und der Reinigungsstation CS zugeordnet sind, um einen Druckmittel-Niederdruckstrahl für die Reinigung der jeweiligen Station DS, CS abzugeben.

Auf etwa gleicher Höhe wie die Werkstück-Halteanordnung WH ist in Fig. 2 rechts neben der Werkstück-Halteanordnung WH eine Übergabestation TS für die Ablage von auf Blockstücken B aufgeblockten Brillengläsern L, abgeblockten Brillengläsern L und Blockstücken B angeordnet. Die Übergabestation TS kann ein am Maschinengestell MG montiertes Förderband (hier nicht dargestellt) zum Transport von Rezeptkästen aufweisen, die der Aufnahme von auf Blockstücken B aufgeblockten Brillengläsern L, abgeblockten Brillengläsern L und Blockstücken B dienen.

Oberhalb der Werkstück-Halteanordnung WH und der Übergabestation TS ist am Maschinengestell MG ein Ladesystem LS (in den Fig. 1 bis 3 mit gestrichelten Linien angedeutet) montiert, mittels dessen die auf Blockstücken B aufgeblockten Brillengläser L, abgeblockte Brillengläser L und Blockstücke B zwischen der Übergabestation TS und der an der Werkstück-Halteanordnung WH vorgesehenen Ladestation PS transportiert und in die bzw. aus der jeweilige(n) Station TS, PS eingelegt bzw. entnommen werden können. Das Ladesystem LS ist Gegenstand der parallel, d.h. mit gleichem Anmeldetag unter dem Titel "Ladesystem für eine Optikmaschine, insbesondere zum Laden und Entladen optischer Werkstücke, wie Brillengläser, und Abblockvorrichtung umfassend ein solches Ladesystem" eingereichten deutschen Patentanmeldung DE 10 2019 006 503.4, auf die an dieser Stelle hinsichtlich des Aufbaus und der Funktion des Ladesystems LS zur Vermeidung von Wiederholungen ausdrücklich verwiesen sei.

Unterhalb der Abblock- und Reinigungsstationen DS, CS - die selbst für eine bestmögliche Ableitung des im Prozess benötigten Wassers unterhalb der Ladestation PS positioniert sind - ist ein trichterförmiger Gehäuseabschnitt TG zum gemeinsamen Sammeln von Druckmittel, Blockmaterial und sonstigen Rückständen zur Aufbereitung bzw. Entsorgung angeordnet, wie in den Fig. 1 bis 3 zu sehen ist.

Weitere Einzelheiten zu der Werkstück-Halteanordnung WH sind insbesondere der Fig. 3 zu entnehmen. Demgemäß besteht eine Besonderheit der Werkstück-Halteanordnung WH darin, dass die Werkstück-Halteanordnung WH eine Mehrzahl von Trennwänden TW aufweist, die vier Arbeitsräume AR1, AR2, AR3, AR4 voneinander trennen und begrenzen (in Fig. 3 auch durch die jeweils stirnseitig angebrachten römischen Ziffern I I, II II, III III, IV IV gekennzeichnet). Dabei ist zur parallelen Nutzung für verschiedene Brillengläser L jedem Arbeitsraum AR1, AR2, AR3, AR4 ein eigener Werkstückhalter CH zugeordnet (vgl. die Fig. 1 und 2), hier jeweils in der Form einer Spannzange.

Die Arbeitsräume AR1, AR2, AR3, AR4 können mit der Werkstück-Halteanordnung WH gemeinsam bezüglich des Maschinengestells MG bewegt werden, so dass jeder Arbeitsraum AR1, AR2, AR3, AR4 wahlweise von der am Maschinengestell MG ortsfesten Ladestation PS zu den hiervon räumlich beabstandeten Behandlungs- bzw. Bearbeitungsstationen DS, CS verlagert werden kann und umgekehrt. Genauer gesagt kann jeder Arbeitsraum AR1, AR2, AR3, AR4 mit der Werkstück-Halteanordnung WH in einem Bewegungszyklus (durch einen zentralen Rundpfeil in Fig. 3 angedeutet) von der ersten Teilstation PS1 der Ladestation PS (Quadrant oben rechts in Fig. 3) über die Abblockstation DS (Quadrant unten rechts), die Reinigungsstation CS (Quadrant unten links) und die zweite Teilstation PS2 der Ladestation PS (Quadrant oben links) wieder zur ersten Teilstation PS1 der Ladestation PS verlagert werden, so dass die Arbeitsräume AR1, AR2, AR3, AR4 für verschiedene Brillengläser L und unterschiedliche Vorgänge (Beladen, Abblocken, Reinigen, Entladen) zeitgleich genutzt werden können. Für die Hydraulikanordnung HA bedeutet dies, dass hydraulischer Druck sowohl für den Abblockvorgang als auch für die Reinigungsvorgänge zur selben Zeit zur Verfügung stehen muss.

Für diesen zyklischen Betrieb sind die Arbeitsräume AR1, AR2, AR3, AR4 der Werkstück-Halteanordnung WH mit ihren Werkstückhaltern CH um eine gemeinsame Drehachse RA drehbar angeordnet. Insgesamt ergibt sich eine trommelartige Ausbildung der Werkstück-Halteanordnung WH, mit zwei einander gegenüberliegenden Stirnwänden SW1, SW2, zwischen denen die die Arbeitsräume AR1, AR2, AR3, AR4 separierenden Trennwände TW angeordnet sind. Dabei verläuft die Drehachse RA durch die zueinander parallelen Stirnwände SW1, SW2.

Während eine erste Stirnwand SW1 der trommelartig ausgestalteten Werkstück-Halteanordnung WH die Werkstückhalter CH trägt, wie in Fig. 2 gut zu erkennen ist, trägt eine zweite Stirnwand SW2 der Werkstück-Halteanordnung WH gemäß Fig. 2 Werkstückgegenhalter WC, die mit den Werkstückhaltern CH ausgefluchtet sind. Sowohl die Werkstückhalter CH als auch die Werkstückgegenhalter WC sind ferner jeweils um ihre Längsachse drehbar gelagert. Mit anderen Worten gesagt ergibt sich eine zirkulare Anordnung von vier Spindelpaaren, die um die Drehachse RA gleichmäßig voneinander winkelbestandet sind. Zudem sind die Werkstückgegenhalter WC jeweils entlang ihrer Längsachse parallel zur Drehachse RA axial verlagerbar. Hierbei sind die Werkstückgegenhalter WC jeweils an ihrem in den jeweiligen Arbeitsraum AR1, AR2, AR3, AR4 hineinragenden Ende mit einem Saugkopf SH zum Halten des Brillenglases L versehen (vgl. Fig. 2), über den das Brillenglas L beim Abblocken vom Blockstück B abgezogen wird.

Zu weiteren Einzelheiten der Hydraulikanordnung HA ist zunächst auf die Fig. 4 und die hydraulische Schaltskizze gemäß Fig. 12 zu verweisen. Die Pumpeneinrichtung PE, die gemäß Fig. 12 einen Niederdruckabschnitt NDA von einem Hochdruckabschnitt HDA der Hydraulikanordnung HA trennt (in Fig. 12 durch eine dicke gestrichelte Linie angedeutet), hat die Aufgabe, das über den Niederdruckabschnitt NDA zugeführte Druckmittel (Wasser) definiert mit Druck zu beaufschlagen und druckbeaufschlagt zu der Düsenanordnung DA im Hochdruckabschnitt HDA zu fördern.

Gemäß Fig. 4 umfasst die Pumpeneinrichtung PE hierfür eine erste Hochdruckpumpe HP1 und eine zweite Hochdruckpumpe HP2. Jede der Hochdruckpumpen HP1, HP2 ist durch einen zugeordneten Drehantrieb angetrieben, dessen Drehzahl zur Einstellung des vorerwähnten ersten Drucks zum Abblocken oder des genannten zweiten Drucks zum Reinigen verändert werden kann. Durch eine geeignete Drehzahlregelung kann der Druck den jeweiligen Prozesserfordernissen entsprechend feinfühlig eingestellt werden; ebenfalls ist es möglich, Beschleunigungs- und Bremsrampen zu definieren, um z.B. Kavitationseffekten in den Verdichterstufen entgegenzuwirken.

Genauer gesagt ist den Hochdruckpumpen HP1, HP2 der Pumpeneinrichtung PE jeweils ein Servomotor SM1, SM2 als Drehantrieb zugeordnet, der mit der jeweiligen Hochdruckpumpe HP1, HP2 über ein Winkelgetriebe WG1, WG2 antriebsverbunden ist, wie in Fig. 4 gezeigt. In Fig. 4 ist auch zu erkennen, wie kompakt diese Servomotor-Winkelgetriebe-Kombinationen bauen. Im dargestellten Ausführungsbeispiel sind jeweils die Hochdruckpumpen HP1, HP2, die Winkelgetriebe WG1, WG2 und die Servomotoren SM1, SM2 identisch, d.h. baugleich ausgebildet. Als Hochdruckpumpen HP1, HP2 der Pumpeneinrichtung PE kommen hier bevorzugt Plungerpumpen zum Einsatz.

Wie am besten in der Schaltskizze gemäß Fig. 12 zu sehen ist, sind die erste Hochdruckpumpe HP1 und die zweite Hochdruckpumpe HP2 der Pumpeneinrichtung PE parallel angeordnet. Dabei kann jede der Hochdruckpumpen HP1, HP2 über die gemeinsame Verteilereinrichtung VE (in Fig. 12 durch eine mitteldicke gestrichelte Linie angedeutet) im Hochdruckabschnitt HDA der Hydraulikanordnung HA wahlweise mit jeder der Hochdruckdüsen HD1, HD2, HD3 der Düsenanordnung DA verbunden werden. Mit anderen Worten gesagt kann jede der Hochdruckpumpen HP1, HP2 über eine flexible hydraulische Verteilung jede der Hochdruckdüsen HD1, HD2, HD3 bedienen.

Wie die Fig. 12 ferner zeigt, weist die Verteilereinrichtung VE hierfür zwei Versorgungsstränge VS1, VS2 auf, die jeweils mit einer der Hochdruckpumpen HP1, HP2 fluidverbunden sind. Jedem Versorgungsstrang VS1, VS2 ist dabei allgemein betrachtet eine Mehrzahl von (hier jeweils drei) Hochdruckschaltventilen HSV1, HSV3, HSV5; HSV2, HSV4, HSV6 zugeordnet, über die wahlweise eine Fluidverbindung von den Versorgungssträngen VS1, VS2 zur jeweiligen Hochdruckdüse HD1, HD2, HD3 hergestellt werden kann. Ferner ist jedem Versorgungsstrang VS1, VS2 als Bypass ein weiteres Hochdruckschaltventil HSV7, HSV8 zugeordnet, über das der jeweilige Versorgungsstrang VS1, VS2 über eine Bypassleitung BP wahlweise mit dem Tank T für das Druckmittel verbunden werden kann.

Im dargestellten Ausführungsbeispiel sind die Hochdruckschaltventile HSV1, HSV2, HSV3, HSV4, HSV5, HSV6, HSV7, HSV8 gegen Federvorspannung pneumatisch betätigbar. Dabei sind die Hochdruckschaltventile HSV1, HSV2, HSV3, HSV4, HSV5, HSV6, HSV7, HSV8 in Schließstellung federvorgespannt, müssen zum Öffnen also mit Druckluft beaufschlagt werden.

In einer vorteilhaft einfachen konstruktiven Ausgestaltung weist die Verteilereinrichtung VE einen gemeinsamen Ventilblock VB auf, der in den Fig. 5 bis 11 näher dargestellt ist. Wie insbesondere die Fig. 9 und 10 jeweils in einer Schnittansicht zeigen, sind die Versorgungsstränge VS1, VS2 in dem Ventilblock VB als (Längs)Kanäle ausgebildet.

Der Ventilblock VB ist auch mit den hydraulischen Eingängen EG1, EG2 für die Verteilung, deren hydraulischen Ausgängen AG1, AG2, AG3, AG4 zu den einzelnen Hochdruckdüsen HD1, HD2, HD3 der Düsenanordnung DA bzw. der Bypassleitung BP zum Tank T und Querkanälen (siehe die Fig. 9 bis 11) zur Bildung von Zusammenführungen ZF1, ZF2, ZF3, ZF4 versehen, die dazu dienen, die hydraulischen Ausgänge eines Ventilpaars HSV1/HSV2, HSV3/ HSV4, HSV5/HSV6, HSV7/HSV8 vorteilhaft ohne weitere Verrohrung zu jeweils einem der hydraulischen Ausgänge AG1, AG2, AG3, AG4 des Ventilblocks VB zusammenzuführen.

Nicht zuletzt bildet der Ventilblock VB einen mechanischen Träger für die Hochdruckschaltventile HSV1, HSV2, HSV3, HSV4, HSV5, HSV6, HSV7, HSV8 und weitere hydraulische Bauteile aus, die nachfolgend unter Bezugnahme auf die Fig. 12 noch beschrieben werden. Hierbei kann der Ventilblock VB als eine kompakte Einheit mit geringem Aufwand am Maschinengestell MG der Abblockvorrichtung AV montiert werden.

Wie der in Fig. 12 dargestellten Schaltskizze der Hydraulikanordnung HA zu entnehmen ist, ist zunächst der Tank T im Niederdruckabschnitt NDA der Hydraulikanordnung HA vorgesehen, in dem das drucklose Druckmittel für die Hydraulikanordnung HA gesammelt wird. Von dem Tank T wird das Druckmittel mittels einer Niederdruckpumpe NP zu einer an sich bekannten Wasseraufbereitung WA gepumpt. Zwischen dem Tank T und der Wasseraufbereitung WA kann ggf. eine Tankzirkulation stattfinden, die in Fig.12 jedoch nicht dargestellt ist. Die Wasseraufbereitung WA versorgt eine Quelle Q mit einem unter Vordruck stehenden Druckmittel. Dabei kann das Druckmittel zur Förderung bzw. Beschleunigung des Abblockvorgangs ggf. temperiert zur Verfügung gestellt werden. Die Quelle Q speist eine Zuführleitung ZL im Niederdruckabschnitt NDA der Hydraulikanordnung HA, die an den parallel geschalteten Hochdruckpumpen HP1, HP2 der Pumpeneinrichtung PE endet.

In der Zuführleitung ZL ist in Strömungsrichtung gesehen direkt hinter der Quelle Q zunächst ein Filter F zwischengeschaltet, der eventuelle Verunreinigungen aus der Wasseraufbereitung WA zurückhält. Solche Verunreinigungen könnten andernfalls beim Abblocken oder Reinigen zu einer Beschädigung der Brillengläser L führen.

Bestandteil des Niederdruckabschnitts NDA der Hydraulikanordnung HA sind ferner drei Niederdruckdüsen ND1, ND2, ND3 für Reinigungszwecke, die über zwei Niederdruckschaltventile NSV1, NSV2 an die Zuführleitung ZL angeschlossen sind und mit Druckmittel versorgt werden können. Bei den Niederdruckdüsen ND1, ND2, die gemeinsam über das erste Niederdruckschaltventil NSV1 versorgt werden, handelt es sich um die vorbeschriebenen, der Abblockstation DS bzw. der Reinigungsstation CS zugeordneten Reinigungsdüsen, die in Fig. 3 gezeigt sind. Die dritte Niederdruckdüse ND3 ist dem Tank T zur "Tankbewegung" zugeordnet, um eventuelle Verunreinigungen im Wasser in der Schwebe zu halten, die dann über die Tankzirkulation zur Wasseraufbereitung WA gelangen können.

Vor den Hochdruckpumpen HP1, HP2 sind ein erstes Manometer M1 und eine Volumenstrommesseinrichtung VSM an die Zuführleitung ZL angeschlossen. Das Manometer M1 dient dazu, den Vordruck des Druckmittels zu überwachen, welches zu den Hochdruckpumpen HP1, HP2 gelangt. Mittels der Volumenstrommesseinrichtung VSM wird der Volumenstrom in der Zuführleitung ZL erfasst. Bei einer festgestellten Minderversorgung kann eine Steuerung (nicht dargestellt) in den Pumpenbetrieb eingreifen.

Die erste Hochdruckpumpe HP1 ist über eine erste Verbindungsleitung VL1 mit dem ersten Eingang EG1 des Ventilblocks VB der Verteilereinrichtung VE verbunden, während die zweite Hochdruckpumpe HP2 über eine zweite Verbindungsleitung VL2 mit dem zweiten Eingang EG2 des Ventilblocks VB der Verteilereinrichtung VE verbunden ist. Hierdurch sind die beiden Versorgungsstränge VS1, VS2 an je eine der Hochdruckpumpen HP1, HP2 angeschlossen.

Optional ist jeder Versorgungsstrang VS1, VS2 mit einer Druckmesseinrichtung M2, M3 verbunden und kann über einen Notablass KH1, KH2 hydraulisch entlastet werden (in den Fig. 1, 2 und 4 nicht gezeigt). In der in Fig. 12 dargestellten Schaltskizze sind hierfür in der ersten Verbindungsleitung VL1 ein zweites Manometer M2 zur visuellen Druckerfassung und ein erster Kugelhahn KH1 und in der zweiten Verbindungsleitung VL2 ein drittes Manometer M3 zur visuellen Druckerfassung und ein zweiter Kugelhahn KH2 angeordnet. Im Falle einer Wartung kann bei einer derartig ausgestalteten Hydraulikanordnung HA der im Hochdruckabschnitt HDA hinter den zwangsfördernden Hochdruckpumpen HP1, HP2 anstehende Druck auch dann manuell über die Kugelhähne KH1, KH2 hydraulisch entlastet werden, wenn die komplette Abblockvorrichtung AV z.B. durch die Betätigung eines Notausschalters spannungsfrei geschaltet wurde.

Der Ventilblock VB der Verteilereinrichtung VE hat einen Ventilblockeingangsabschnitt VBEA und einen Ventilblockausgangsabschnitt VBAA (in Fig. 12 mit dünnen gestrichelten Linien angedeutet). In dem Ventilblockeingangsabschnitt VBEA sind die beiden Versorgungsstränge VS1, VS2 vorgesehen, die sich, wie oben unter Bezugnahme auf die Fig. 9 und 10 schon erwähnt, als (Längs)Kanäle an die Eingänge EG1, EG2 des Ventilblocks VB anschließen und somit mit der ersten bzw. zweiten Hochdruckpumpe HP1, HP2 fluidverbunden sind.

In dem Ventilblockausgangsabschnitt VBAA sind die vier Zusammenführungen ZF1, ZF2, ZF3, ZF4 vorgesehen, die jeweils mit einem der vier Ausgänge AG1, AG2, AG3, AG4 des Ventilblockausgangsabschnitts VBAA hydraulisch verbunden sind. Von Letzteren ist der erste Ausgang AG1 mit der ersten Hochdruckdüse HD1 der ersten Düsenbaugruppe DB1, der zweite Ausgang AG2 mit der zweiten Hochdruckdüse HD2 der zweiten Düsenbaugruppe DB2, der dritte Ausgang AG3 mit der dritten Hochdruckdüse HD3 der dritten Düsenbaugruppe DB3 und der vierte Ausgang AG4 mit der Bypassleitung BP verbunden.

Zwischen dem Ventilblockeingangsabschnitt VBEA und dem Ventilblockausgangsabschnitt VBAA sind die acht Hochdruckschaltventile HSV1, HSV2, HSV3, HSV4, HSV5, HSV6, HSV7, HSV8 angeordnet. Dabei sind im Ventilblockeingangsabschnitt VBEA das erste, dritte, fünfte und siebte Hochdruckschaltventil HSV1, HSV3, HSV5, HSV7 mit dem ersten Versorgungsstrang VS1 und das zweite, vierte, sechste und achte Hochdruckschaltventil HSV2, HSV4, HSV6, HSV8 mit dem zweiten Versorgungsstrang VS2 hydraulisch verbunden. Im Ventilblockausgangsabschnitt VBAA sind die Ausgänge des ersten und des zweiten Hochdruckschaltventils HSV1, HSV2 in der ersten Zusammenführung ZF1, des dritten und des vierten Hochdruckschaltventils HSV3, HSV4 in der zweiten Zusammenführung ZF2, des fünften und des sechsten Hochdruckschaltventils HSV5, HSV6 in der dritten Zusammenführung ZF3 und des siebten und des achten Hochdruckschaltventils HSV7, HSV8 in der vierten Zusammenführung ZF4 zusammengeführt.

Bei der so ausgebildeten Ventilschaltung kann durch eine entsprechende pneumatische Druckbeaufschlagung eines der Hochdruckschaltventile HSV1, HSV2, HSV3, HSV4, HSV5, HSV6 somit wahlweise eine jede der Hochdruckpumpen HP1, HP2 über die Versorgungsstränge VS1, VS2 in dem Ventilblock VB mit jeder der Hochdruckdüsen HD1, HD2, HD3 verbunden werden. Darüber hinaus kann jeder Versorgungsstrang VS1, VS2 über das siebte bzw. achte Hochdruckschaltventil HSV7, HSV8 wahlweise mit dem vierten Ausgang AG4 und somit mit der Bypassleitung BP verbunden werden, über die der jeweilige Versorgungsstrang VS1, VS2 zum Tank T für das Druckmittel druckentlastet werden kann.

Des Weiteren ist jedem Versorgungsstrang VS1, VS2 ein mit der Bypassleitung BP verbundenes Überdruckventil ÜV1, ÜV2 zugeordnet, über das der jeweilige Versorgungsstrang VS1, VS2 bei Überschreiten eines vorbestimmten Drucks (z.B. 200 bar) Druckmittel in den Tank T ableiten kann. Auch die Überdruckventile ÜV1, ÜV2 sind gemäß den Fig. 5 bis 10 endseitig am Ventilblock VB montiert. Schließlich kann auch der Druck in den Versorgungssträngen VS1, VS2 über jeweils zugeordnete Manometer M4, M5 überwacht werden. Letztere sind ebenfalls auf dem Ventilblock VB angebracht, wie in den Fig. 5, 7, 8 und 11 gezeigt.

Durch die so gebildete Hydraulikanordnung HA kann die vorbeschriebene Abblockvorrichtung AV mit zeitgleichen Hochdruckprozessschritten (Abblocken und Reinigen) ohne Leistungsreduktion und energetisch günstig über zwei Hochdruckpumpen HP1, HP2 versorgt werden. Die Hochdruckpumpen HP1, HP2 können hierbei sehr flexibel zu jedem Prozessschritt zu- und weggeschaltet werden; bevorzugt laufen die Hochdruckpumpen HP1, HP2 permanent und fördern, wenn gerade kein Hochdruckprozess zu bedienen ist, über den gebildeten Bypass im Kreis. Außerdem ist es möglich, die erforderlichen Drücke schnell und genau einzustellen. Schließlich können beide Hochdruckpumpen HP1, HP2 mit ihren zur Druckeinstellung in der Drehzahl einstellbaren Servomotoren SM1, SM2 gleichmäßig ausgelastet werden, wobei es stets möglich ist, den Druck prozessgerecht vorzuwählen und einzustellen.

Eine eine Hydraulikanordnung aufweisende Vorrichtung zum Abblocken von optischen Werkstücken, wie Brillengläsern, von zugeordneten Blockstücken, umfasst eine Düsenanordnung für die Abgabe von Druckmittel-Hochdruckstrahlen zum Abblocken des Werkstücks vom zugeordneten Blockstück mit einem ersten Druck und zum Reinigen des abgeblockten Werkstücks und/oder Blockstücks mit wenigstens einem zweiten Druck, der vom ersten Druck verschieden ist. Ferner ist eine Pumpeneinrichtung vorgesehen, die dazu dient, das Druckmittel definiert mit Druck zu beaufschlagen und druckbeaufschlagt zu der Düsenanordnung zu fördern. Um in zuverlässiger Weise eine prozessgerechte Druckerzeugung zu ermöglichen, umfasst die Pumpeneinrichtung eine erste Hochdruckpumpe und eine zweite Hochdruckpumpe, die durch jeweils einen zugeordneten Drehantrieb antreibbar sind, dessen Drehzahl zur Einstellung des ersten Drucks oder des zweiten Drucks veränderbar ist, wobei die zwei Hochdruckpumpen dazu dienen, den ersten Druck bzw. den zweiten Druck zu erzeugen.

### BEZUGSZEICHENLISTE

- AG1: erster Ausgang des Ventilblocks
- AG2: zweiter Ausgang des Ventilblocks
- AG3: dritter Ausgang des Ventilblock
- AG4: vierter Ausgang des Ventilblocks
- AV: Abblockvorrichtung AV
- AR1: erster Arbeitsraum der Werkstück-Halteanordnung
- AR2: zweiter Arbeitsraum der Werkstück-Halteanordnung
- AR3: dritter Arbeitsraum der Werkstück-Halteanordnung
- AR4: vierter Arbeitsraum der Werkstück-Halteanordnung
- B: Blockstück B
- BP: Bypassleitung der Hydraulikanordnung
- CH: Werkstückhalter der Werkstück-Halteanordnung
- CS: Reinigungsstation der Abblockvorrichtung
- DA: Düsenanordnung der Abblockvorrichtung
- DB1: erste Düsenbaugruppe in Abblockstation
- DB2: zweite Düsenbaugruppe in Reinigungsstation
- DB3: dritte Düsenbaugruppe in Reinigungsstation
- DS: Abblockstation der Abblockvorrichtung
- EG1: erster Eingang des Ventilblocks
- EG2: zweiter Eingang des Ventilblocks
- F: Filter der Hydraulikanordnung
- HA: Hydraulikanordnung der Abblockvorrichtung
- HD1: erste Hochdruckdüse in Abblockstation
- HD2: zweite Hochdruckdüse in Reinigungsstation
- HD3: dritte Hochdruckdüse in Reinigungsstation
- HDA: Hochdruckabschnitt der Hydraulikanordnung
- HP1: erste Hochdruckpumpe der Pumpeneinrichtung
- HP2: zweite Hochdruckpumpe der Pumpeneinrichtung
- HSV1: erstes Hochdruckschaltventil der Verteilereinrichtung
- HSV2: zweites Hochdruckschaltventil der Verteilereinrichtung
- HSV3: drittes Hochdruckschaltventil der Verteilereinrichtung
- HSV4: viertes Hochdruckschaltventil der Verteilereinrichtung
- HSV5: fünftes Hochdruckschaltventil der Verteilereinrichtung
- HSV6: sechstes Hochdruckschaltventil der Verteilereinrichtung
- HSV7: siebtes Hochdruckschaltventil der Verteilereinrichtung
- HSV8: achtes Hochdruckschaltventil der Verteilereinrichtung
- KH1: erster Kugelhahn der Hydraulikanordnung
- KH2: zweiter Kugelhahn der Hydraulikanordnung
- L: optisches Werkstück / Brillenglas
- LS: Ladesystem der Abblockvorrichtung
- M1: erstes Manometer der Hydraulikanordnung
- M2: zweites Manometer der Hydraulikanordnung
- M3: drittes Manometer der Hydraulikanordnung
- M4: viertes Manometer der Hydraulikanordnung
- M5: fünftes Manometer der Hydraulikanordnung
- MG: Maschinengestell der Abblockvorrichtung
- ND1: erste Niederdruckdüse der Hydraulikanordnung
- ND2: zweite Niederdruckdüse der Hydraulikanordnung
- ND3: dritte Niederdruckdüse der Hydraulikanordnung
- NDA: Niederdruckabschnitt der Hydraulikanordnung
- NP: Niederdruckpumpe für Hydraulikanordnung
- NSV1: erstes Niederdruckschaltventil der Hydraulikanordnung
- NSV2: zweites Niederdruckschaltventil der Hydraulikanordnung
- PE: Pumpeneinrichtung der Hydraulikanordnung
- PS: Ladestation der Abblockvorrichtung
- PS1: erste Teilstation der Ladestation
- PS2: zweite Teilstation der Ladestation
- Q: Quelle für Hydraulikanordnung
- RA: Drehachse der Werkstück-Halteanordnung
- SH: Saugkopf an Werkstückgegenhalter
- SM1: erster Servomotor der Pumpeneinrichtung
- SM2: zweiter Servomotor der Pumpeneinrichtung
- SW1: erste Stirnwand der Werkstück-Halteanordnung
- SW2: zweite Stirnwand der Werkstück-Halteanordnung
- T: Tank für Hydraulikanordnung
- TG: trichterförmiger Gehäuseabschnitt
- TS: Übergabestation der Abblockvorrichtung
- TW: Trennwand der Werkstück-Halteanordnung
- ÜV1: erstes Überdruckventil der Hydraulikanordnung
- ÜV2: zweites Überdruckventil der Hydraulikanordnung
- VB: Ventilblock der Verteilereinrichtung
- VBAA: Ventilblockausgangsabschnitt
- VBEA: Ventilblockeingangsabschnitt
- VE: Verteilereinrichtung der Hydraulikanordnung
- VL1: erste Verbindungsleitung der Hydraulikanordnung
- VL2: zweite Verbindungsleitung der Hydraulikanordnung
- VS1: erster Versorgungsstrang der Hydraulikanordnung
- VS2: zweiter Versorgungsstrang der Hydraulikanordnung
- VSM: Volumenstrommesseinrichtung der Hydraulikanordnung
- WA: Wasseraufbereitung für Hydraulikanordnung
- WC: Werkstückgegenhalter der Werkstück-Halteanordnung
- WG1: erstes Winkelgetriebe der Pumpeneinrichtung
- WG2: zweites Winkelgetriebe der Pumpeneinrichtung
- WH: Werkstück-Halteanordnung der Abblockvorrichtung
- ZF1: erste Zusammenführung in Verteilereinrichtung
- ZF2: zweite Zusammenführung in Verteilereinrichtung
- ZF3: dritte Zusammenführung in Verteilereinrichtung
- ZF4: vierte Zusammenführung in Verteilereinrichtung
- ZL: Zuführleitung der Hydraulikanordnung

- x: Längenrichtung
- y: Breitenrichtung
- z: Höhenrichtung

## Patentansprüche

1. Vorrichtung (AV) zum Abblocken von optischen Werkstücken (L), insbesondere Brillengläsern, von zugeordneten Blockstücken (B) mit einer Hydraulikanordnung (HA), umfassend
eine Düsenanordnung (DA) für die Abgabe von Druckmittel-Hochdruckstrahlen zum Abblocken des Werkstücks (L) vom zugeordneten Blockstück (B) mit einem ersten Druck und zum Reinigen des abgeblockten Werkstücks (L) und/oder des Blockstücks (B) mit wenigstens einem zweiten, vom ersten Druck verschiedenen Druck und
eine Pumpeneinrichtung (PE), die einen Niederdruckabschnitt (NDA) von einem Hochdruckabschnitt (HDA) der Hydraulikanordnung (HA) trennt und dazu dient, das über den Niederdruckabschnitt (NDA) zugeführte Druckmittel definiert mit Druck zu beaufschlagen und druckbeaufschlagt zu der Düsenanordnung (DA) im Hochdruckabschnitt (HDA) zu fördern,
**dadurch gekennzeichnet, dass** die Pumpeneinrichtung (PE) eine erste Hochdruckpumpe (HP1) und eine zweite Hochdruckpumpe (HP2) umfasst, die durch jeweils einen zugeordneten Drehantrieb (SM1, SM2) antreibbar sind, dessen Drehzahl zur Einstellung des ersten Drucks oder des zweiten Drucks veränderbar ist, wobei mittels der ersten Hochdruckpumpe (HP1) wenigstens der erste Druck und mittels der zweiten Hochdruckpumpe (HP2) wenigstens der zweite Druck erzeugbar ist.

2. Vorrichtung (AV) nach Anspruch 1, **dadurch gekennzeichnet, dass** den Hochdruckpumpen (HP1, HP2) der Pumpeneinrichtung (PE) jeweils ein Servomotor (SM1, SM2) als Drehantrieb zugeordnet ist, der mit der jeweiligen Hochdruckpumpe (HP1, HP2) über ein Winkelgetriebe (WG1, WG2) antriebsverbunden ist.

3. Vorrichtung (AV) nach Anspruch 1 oder 2, **dadurch gekennzeichnet, dass** die Hochdruckpumpen (HP1, HP2) der Pumpeneinrichtung (PE) identisch ausgebildet sind.

4. Vorrichtung (AV) nach einem der vorhergehenden Ansprüche, **dadurch gekennzeichnet, dass** die Hochdruckpumpe(n) (HP1, HP2) der Pumpeneinrichtung (PE) als Plungerpumpe(n) ausgebildet ist bzw. sind.

5. Vorrichtung (AV) nach einem der vorhergehenden Ansprüche, **dadurch gekennzeichnet, dass** die Düsenanordnung (DA) im Hochdruckabschnitt (HDA) der Hydraulikanordnung (HA) eine erste Düsenbaugruppe (DB1) mit einer ersten Hochdruckdüse (HD1) für die Abgabe des Druckmittel-Hochdruckstrahls zum Abblocken des Werkstücks (L) vom zugeordneten Blockstück (B) und eine zweite Düsenbaugruppe (DB2) mit einer zweiten Hochdruckdüse (HD2) für die Abgabe des Druckmittel-Hochdruckstrahls zum Reinigen des abgeblockten Werkstücks (L) und/oder des Blockstücks (B) umfasst.

6. Vorrichtung (AV) nach Anspruch 5, **dadurch gekennzeichnet, dass** die Düsenanordnung (DA) im Hochdruckabschnitt (HDA) der Hydraulikanordnung (HA) eine dritte Düsenbaugruppe (DB3) mit einer dritten Hochdruckdüse (HD3) für die Abgabe eines Druckmittel-Hochdruckstrahls zum Reinigen des Blockstücks (B) und/ oder des Werkstücks (L) aufweist.

7. Vorrichtung (AV) nach Anspruch 5 oder 6, **dadurch gekennzeichnet, dass** die erste Hochdruckpumpe (HP1) und die zweite Hochdruckpumpe (HP2) parallel angeordnet sind, wobei jede der Hochdruckpumpen (HP1, HP2) über eine gemeinsame Verteilereinrichtung (VE) im Hochdruckabschnitt (HDA) der Hydraulikanordnung (HA) wahlweise mit jeder der Hochdruckdüsen (HD1, HD2; HD1, HD2, HD3) verbindbar ist.

8. Vorrichtung (AV) nach Anspruch 7, **dadurch gekennzeichnet, dass** die Verteilereinrichtung (VE) zwei Versorgungsstränge (VS1, VS2) aufweist, die jeweils mit einer der Hochdruckpumpen (HP1, HP2) fluidverbunden sind, wobei jedem Versorgungsstrang (VS1, VS2) eine Mehrzahl von Hochdruckschaltventilen (HSV1, HSV3, HSV5; HSV2, HSV4, HSV6) zugeordnet ist, über die wahlweise eine Fluidverbindung von den Versorgungssträngen (VS1, VS2) zur jeweiligen Hochdruckdüse (HD1, HD2, HD3) herstellbar ist.

9. Vorrichtung (AV) nach Anspruch 8, **dadurch gekennzeichnet, dass** jedem Versorgungsstrang (VS1, VS2) als Bypass ein weiteres Hochdruckschaltventil (HSV7, HSV8) zugeordnet ist, über das der jeweilige Versorgungsstrang (VS1, VS2) wahlweise mit einem Tank (T) für das Druckmittel verbindbar ist.

10. Vorrichtung (AV) nach Anspruch 8 oder 9, **dadurch gekennzeichnet, dass** die Hochdruckschaltventile (HSV1, HSV2, HSV3, HSV4, HSV5, HSV6, HSV7, HSV8) gegen Federvorspannung pneumatisch betätigbar sind.

11. Vorrichtung (AV) nach Anspruch 10, **dadurch gekennzeichnet, dass** die Hochdruckschaltventile (HSV1, HSV2, HSV3, HSV4, HSV5, HSV6, HSV7, HSV8) in Schließstellung federvorgespannt sind.

12. Vorrichtung (AV) nach einem der Ansprüche 8 bis 11, **dadurch gekennzeichnet, dass** jedem Versorgungsstrang (VS1, VS2) ein Überdruckventil (ÜV1, ÜV2) zugeordnet ist, über das der jeweilige Versorgungsstrang (VS1, VS2) bei Überschreiten eines vorbestimmten Drucks mit einem Tank (T) für das Druckmittel verbindbar ist, und/oder jeder Versorgungsstrang (VS1, VS2) über einen Notablass (KH1, KH2) hydraulisch entlastbar ist und/oder mit einer Druckmesseinrichtung (M2, M3) verbunden ist.

13. Vorrichtung (AV) nach einem der Ansprüche 8 bis 12, **dadurch gekennzeichnet, dass** die Verteilereinrichtung (VE) einen gemeinsamen Ventilblock (VB) aufweist, in dem die Versorgungsstränge (VS1, VS2) als Kanäle ausgebildet sind und der die Hochdruckschaltventile (HSV1, HSV2, HSV3, HSV4, HSV5, HSV6, HSV7, HSV8) trägt.

14. Vorrichtung (AV) nach einem der vorhergehenden Ansprüche, **dadurch gekennzeichnet, dass** im Niederdruckabschnitt (NDA) wenigstens eine Niederdruckdüse (ND1, ND2, ND3) für Reinigungszwecke vorgesehen ist, die über ein Niederdruckschaltventil (NSV1, NSV2), welches an eine Zuführleitung (ZL) für das Druckmittel angeschlossen ist, mit dem Druckmittel versorgbar ist.

## Claims

1. Device (AV) for deblocking optical workpieces (L), particularly spectacle lenses, from associated block pieces (B) with a hydraulic arrangement (HA), comprising
a nozzle arrangement (DA) for delivery of high-pressure pressure medium jets for deblocking the workpiece (L) from the associated block piece (B) at a first pressure and for cleaning the deblocked workpiece (L) and/or the block piece (B) at at least one second pressure different from the first pressure, and
a pump device (PE) which separates a low-pressure section (NDA) from a high-pressure section (HDA) of the hydraulic arrangement (HA) and serves the purpose of loading the pressure medium, which is fed by way of the low-pressure section (NDA), in defined manner with pressure and of conveying it under pressure to the nozzle arrangement (DA) in the high-pressure section (HDA),
**characterized in that** the pump device (PE) comprises a first high-pressure pump (HP1) and a second high-pressure pump (HP2), each of which being drivable by an associated rotary drive (SM1, SM2), the rotational speed of which is variable for setting the first pressure or the second pressure, wherein at least the first pressure can be generated by the first high-pressure pump (HP1) and at least the second pressure can be generated by the second high-pressure pump (HP2).

2. Device (AV) according to claim 1, **characterized in that** a respective servomotor (SM1, SM2) is associated as rotary drive with each of the high-pressure pumps (HP1, HP2) of the pump device (PE) and is drivingly connected with the respective high-pressure pump (HP1, HP2) by way of an angle transmission (WG1, WG2).

3. Device (AV) according to claim 1 or 2, **characterized in that** the high-pressure pumps (HP1, HP2) of the pump device (PE) are of identical construction.

4. Device (AV) according to any one of the preceding claims, **characterized in that** the high-pressure pump or pumps (HP1, HP2) of the pump device (PE) is or are constructed as a plunger pump or as plunger pumps.

5. Device (AV) according to any one of the preceding claims, **characterized in that** the nozzle arrangement (DA) in the high-pressure section (HDA) of the hydraulic arrangement (HA) comprises a first nozzle subassembly (DB1) with a first high-pressure nozzle (HD1) for delivery of the high-pressure pressure medium jet for deblocking the workpiece (L) from the associated block piece (B) and a second nozzle subassembly (DB2) with a second high-pressure nozzle (HD2) for delivery of the high-pressure pressure medium jet for cleaning the deblocked workpiece (L) and/or the block piece (B).

6. Device (AV) according to claim 5, **characterized in that** the nozzle arrangement (DA) in the high-pressure section (HDA) of the hydraulic arrangement (HA) comprises a third nozzle subassembly (DB3) with a third high-pressure nozzle (HD3) for delivery of a high-pressure pressure medium jet for cleaning the block piece (B) and/or the workpiece (L).

7. Device (AV) according to claim 5 or 6, **characterized in that** the first high-pressure pump (HP1) and the second high-pressure pump (HP2) are arranged in parallel, wherein each of the high-pressure pumps (HP1, HP2) is selectably connectible with each of the high-pressure nozzles (HD1, HD2; HD1, HD2, HD3) by way of a common distributor device (VE) in the high-pressure section (HDA) of the hydraulic arrangement (HA).

8. Device (AV) according to claim 7, **characterized in that** the distributor device (VE) comprises two supply lines (VS1, VS2) which are each in fluid connection with a respective one of the high-pressure pumps (HP1, HP2), wherein associated with each supply line (VS1, VS2) is a plurality of high-pressure switching valves (HSV1, HSV3, HSV5; HSV2, HSV4, HSV6) by way of which a fluid connection from the supply lines (VS1, VS2) to the respective high-pressure nozzle (HD1, HD2, HD3) can be selectably produced.

9. Device (AV) according to claim 8, **characterized in that** associated with each supply line (VS1, VS2) as a bypass is a further high-pressure switching valve (HSV7, HSV8) by way of which the respective supply line (VS1, VS2) is selectably connectible with a tank (T) for the pressure medium.

10. Device (AV) according to claim 8 or 9, **characterized in that** the high-pressure switching valves (HSV1, HSV2, HSV3, HSV4, HSV5, HSV6, HSV7, HSV8) are pneumatically actuable against a spring bias.

11. Device (AV) according to claim 10, **characterized in that** the high-pressure switching valves (HSV1, HSV2, HSV3, HSV4, HSV5, HSV6, HSV7, HSV8) are spring-biased into closed setting.

12. Device (AV) according to any one of claims 8 to 11, **characterized in that** associated with each supply line (VS1, VS2) is an excess-pressure valve (ÜV1, ÜV2) by way of which the respective supply line (VS1, VS2) is connectible with a tank (T) for the pressure medium if a predetermined pressure is exceeded and/or each supply line (VS1, VS2) can be hydraulically relieved by way of an emergency discharge (KH1, KH2) and/or is connected with a pressure measuring device (M2, M3).

13. Device (AV) according to any one of claims 8 to 12, **characterized in that** the distributor device (VE) comprises a common valve block (VB) in which the supply lines (VS1, VS2) are formed as channels and which carries the high-pressure switching valves (HSV1, HSV2, HSV3, HSV4, HSV5, HSV6, HSV7, HSV8).

14. Device (AV) according to any one of the preceding claims, **characterized in that** provided in the low-pressure section (NDA) is at least one low-pressure nozzle (ND1, ND2, ND3) for cleaning purposes, which can be supplied with the pressure medium by way of a low-pressure switching valve (NSV1, NSV2) connected with a feed line (ZL) for the pressure medium.

## Revendications

1. Dispositif (AV) pour repousser des pièces (L) optiques, en particulier des verres de lunettes, de pièces de blocage (B) associées avec un ensemble hydraulique (HA), comprenant un ensemble de buses (DA) destiné à délivrer des jets à haute pression de fluide sous pression pour repousser la pièce (L) de la pièce de blocage (B) associée avec une première pression et pour nettoyer la pièce (L) repoussée et/ou la pièce de blocage (B) avec au moins une deuxième pression différente de la première pression et
un système de pompe (PE), qui sépare une section basse pression (NDA) d'une section haute pression (HDA) de l'ensemble hydraulique (HA) et qui sert à soumettre le fluide sous pression amené par la section basse pression (NDA) de manière définie à l'action d'une pression et à le transporter sous l'action d'une pression à l'ensemble de buses (DA) dans la section haute pression (HDA),
**caractérisé en ce que** le système de pompe (PE) comprend une première pompe haute pression (HP1) et une deuxième pompe haute pression (HP2), qui peuvent être entraînées par un entraînement en rotation (SM1, SM2) associé, dont la vitesse de rotation peut être modifiée pour régler la première pression ou la deuxième pression, au moins la première pression pouvant être générée au moyen de la première pompe haute pression (HP1) et au moins la deuxième pression pouvant être générée au moyen de la deuxième pompe haute pression (HP2).

2. Dispositif (AV) selon la revendication 1, **caractérisé en ce qu'**un servomoteur (SM1, SM2) est associé en tant qu'entraînement rotation aux pompes haute pression (HP1, HP2) du système de pompe (PE), lequel est relié en entraînement à la pompe haute pression (HP1, HP2) respective par un entraînement angulaire (WG1, WG2).

3. Dispositif (AV) selon la revendication 1 ou 2, **caractérisé en ce que** les pompes haute pression (HP1, HP2) du système de pompe (PE) sont formées de manière identique.

4. Dispositif (AV) selon l'une des revendications précédentes, **caractérisé en ce que** la ou les pompes haute pression (HP1, HP2) du système de pompe (PE) est ou sont formée(s) en tant que pompe(s) à piston.

5. Dispositif (AV) selon l'une des revendications précédentes, **caractérisé en ce que** l'ensemble de buses (DA) comprend dans la section haute pression (HDA) de l'ensemble hydraulique (HA) un premier module de buse (DB1) avec une première buse haute pression (HD1) pour distribuer le jet à haute pression de fluide sous pression pour repousser la pièce (L) de la pièce de blocage (B) associée et un deuxième module de buse (DB2) avec une deuxième buse haute pression (HD2) pour distribuer le jet à haute pression de fluide sous pression pour nettoyer la pièce (L) repoussée et/ou la pièce de blocage (B).

6. Dispositif (AV) selon la revendication 5, **caractérisé en ce que** l'ensemble de buses (DA) dans la section haute pression (HDA) de l'ensemble hydraulique (HA) comporte un troisième module de buse (DB3) avec une troisième buse haute pression (HD3) pour distribuer un jet à haute pression de fluide sous pression pour nettoyer la pièce de blocage (B) et/ou la pièce (L).

7. Dispositif (AV) selon la revendication 5 ou 6, **caractérisé en ce que** la première pompe haute pression (HP1) et la deuxième pompe haute pression (HP2) sont disposées en parallèle, chacune des pompes haute pression (HP1, HP2) pouvant être reliée par un système de répartition commun (VE) dans la section haute pression (HDA) de l'ensemble hydraulique (HA) au choix à chacune des buses haute pression (HD1, HD2 ; HD1, HD2, HD3).

8. Dispositif (AV) selon la revendication 7, **caractérisé en ce que** le système de répartition (VE) comporte deux lignes d'alimentation (VS1, VS2), qui sont reliées chacune fluidiquement à une des pompes haute pression (HP1, HP2), chaque ligne d'alimentation (VS1, VS2) étant associée à une multitude de soupapes de commutation haute pression (HSV1, HSV3, HSV5 ; HSV2, HSV4, HSV6), par lesquelles une liaison fluidique entre les lignes d'alimentation (VS1, VS2) et la buse haute pression (HD1, HD2, HD3) respective peut être établie au choix.

9. Dispositif (AV) selon la revendication 8, **caractérisé en ce qu'**une autre soupape de commutation haute pression (HSV7, HSV8) est associée à chaque ligne d'alimentation (VS1, VS2) en tant que dérivation, par laquelle la ligne d'alimentation (VS1, VS2) respective peut être reliée au choix à un réservoir (T) pour le fluide sous pression.

10. Dispositif (AV) selon la revendication 8 ou 9, **caractérisé en ce que** les soupapes de commutation haute pression (HSV1, HSV2, HSV3, HSV4, HSV5, HSV6, HSV7, HSV8) peuvent être actionnées pneumatiquement contre la précontrainte de ressort.

11. Dispositif (AV) selon la revendication 10, **caractérisé en ce que** les soupapes de commutation haute pression (HSV1, HSV2, HSV3, HSV4, HSV5, HSV6, HSV7, HSV8) sont précontraintes par ressort en position fermée.

12. Dispositif (AV) selon l'une des revendications 8 à 11, **caractérisé en ce qu'**est associée à chaque ligne d'alimentation (VS1, VS2) une soupape de surpression (ÜV1, ÜV2), par laquelle la ligne d'alimentation (VS1, VS2) respective peut être reliée à un réservoir (T) pour le fluide sous pression en cas de dépassement d'une pression prédéfinie, et/ou chaque ligne d'alimentation (VS1, VS2) peut être déchargée hydrauliquement par une purge de secours (KH1, KH2) et/ou est reliée à un système de mesure de pression (M2, M3).

13. Dispositif (AV) selon l'une des revendications 8 à 12, **caractérisé en ce que** le système de répartition (VE) comporte un bloc de soupapes (VB) commun, dans lequel les lignes d'alimentation (VS1, VS2) sont formées sous forme de canaux et qui supporte les soupapes de commutation haute pression (HSV1, HSV2, HSV3, HSV4, HSV5, HSV6, HSV7, HSV8).

14. Dispositif (AV) selon l'une des revendications précédentes, **caractérisé en ce qu'**est prévue dans la section basse pression (NDA) au moins une buse basse pression (ND1, ND2, ND3) à des fins de nettoyage, qui peut être alimentée en fluide sous pression par une soupape de commutation basse pression (NSV1, NSV2), qui est raccordée à une conduite d'amenée (ZL) pour le fluide sous pression.
